# EUROPEAN PATENT SPECIFICATION

(11) **EP 3 616 524 B1**
(45) Date of publication and mention of the grant of the patent: **16.08.2023**
(21) Application number: 19193836.4
(22) Date of filing: 30.06.2017
(51) Int. Cl.: A22B 3/00, A22B 3/02

(54) **MOUNT FOR A STUNNER**
AUFLAGE FÜR EIN BETÄUBUNGSGERÄT
SUPPORT POUR DISPOSITIF D'ÉTOURDISSEMENT

(30) Priority: 01.07.2016 US 201662357566 P; 15.07.2016 US 201615211524; 01.09.2016 US 201615254546; 02.02.2017 US 201762453579 P; 02.02.2017 US 201715422885; 02.03.2017 US 201715447316; 12.04.2017 US 201715485346; 29.06.2017 US 201715637587
(43) Date of publication of application: 04.03.2020
(62) Divisional of application: 17821387.2
(73) Proprietor: Jarvis Products Corporation, Middletown, CT 06457 (US)
(72) Inventor: JONES, Arthur, Tabor, Iowa 51653 (US); JONES, Trent, Tabor, Iowa 51653 (US)
(74) Representative: Zeitler Volpert Kandlbinder Patentanwälte Partnerschaft mbB

(56) References cited:
- US-A- 6 135 871
- US-A1- 2004 209 562

## Description

### 1. Field of the Invention

This invention relates in general to a pneumatic animal stunner for use in livestock/slaughterhouse operations and more specifically to a mount for connection a housing to a handle of an animal stunner.

### 2. Description of Related Art

In livestock production plants, it is important to stun and disable an animal for processing. Although numerous methods have been used to stun livestock, captive bolt mechanisms have proven to be the most efficient, inexpensive, and humane way to disable the animal. Particularly, pneumatic captive bolt devices have been used in this capacity.

U.S. Patent No. 6,135,871 and U.S. Patent Publication No. 2004/0209562 disclose pneumatic animal stunners that, among other things, include a physical catch for the piston that drives the stunning rod.

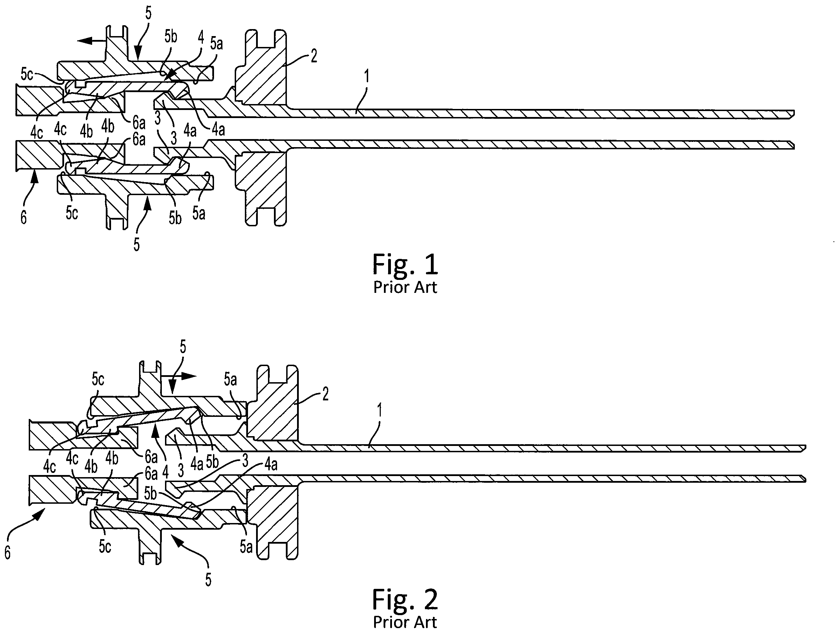

Figs. 1 and 2 show a prior art catch arrangement for a stunner in which stunning rod 1 extending rightward (forward) from a piston 2 has a leftward (rearward) end with outwardly extending lips 3 that may be alternately held and released by inward extending lips at the end portion 4a of a catch 4. At a central portion of the body of catch 4 is an inwardly extending flange 4b which is pivotable about an outwardly extending flange 6a of catch pivot post 6. A catch piston 5 includes an inner bore 5a at a forward end, an inner bore 5c at a rearward end, and a relief portion 5b between the two. In the hold position of Fig. 1, the catch piston 5 is slid longitudinally rearward so that forward inner bore 5a contacts moves catch forward end 4a toward and into engagement with stunning rod lips 3, at the same time that rearward inner bore 5c contacts the outer surface of catch rearward end 4c. In the release position of Fig. 2, the catch piston 5 is slid longitudinally forward so that forward inner bore 5a moves forward of catch forward end 4a, and the relief portion 5b permits catch forward end 4a to move outward and out of engagement with stunning rod lips 3 as the flange 4b of catch 4 pivots about catch post pivot flange 6a. At the same time, catch piston rearward inner bore 5c slides forward and then moves out of contact with the outer surface of catch rearward end 4c. Upon release of the stunning rod lips, compressed air behind piston 2 moves stunning rod 1 forward to stun the animal.

The catch and other components of such prior designs function well, but in operation some of its components are subject to sliding engagement with other components, and therefore interference and/or wear, which causes drag and/or requires periodic replacement of such components. The stunning rod is also subject to rotation during usage.

Compressed air usage by prior art stunners is also an issue, since excess air volume needed for each stunner cycle increases costs of operation. Additionally, the operator is subject to fatigue when using the stunner repeatedly, due to the shock of the stunning rod projection and retraction in each operation cycle.

### Summary of the Invention

Bearing in mind the problems and deficiencies of the prior art, it is therefore an object of the invention to provide an animal stunner having improved operator comfort and reduction of possible injury.

Still other objects and advantages of the invention will in part be obvious and will in part be apparent from the specification.

The present invention is directed to a mount according to claim 1 for connecting a housing to a handle of an animal stunner, the housing having a stunning rod therein capable of being driven along a longitudinal axis forward to stun an animal and rearward to retract the stunning rod, the handle having a valve trigger to control flow of a pressurized fluid to drive the stunning rod forward, each of the housing and handle having a plurality of passageway for the pressurized fluid to drive the stunning rod. The mount comprises a first mount portion for connection to the housing, and a second mount portion for connection to the handle. The first and second mount portions each have opposite edges. The edges of the first mount portion are spaced from the edges of the second mount portion, the first and second mount portions being secured to each other between the opposite edges. Each of the first and second mount portions contain a plurality of passageway which mate with passageways, respectively, opening from a main valve body for connecting the housing and handle passageways proximate to the location at which the first and second mount portions are secured to each other.

The first mount portion and second mount portion may be secured to each other along an axis to permit a pivoting motion between the first and second mount portions. The spacing between the first edges of the first mount portion and second mount portion may not be equal to the spacing between the second edges of the first mount portion and second mount portion, The mount may further include a pin along the axis wherein the pin includes at least one passageway for connecting the housing and handle passageways. The at least one pin may be disposed along the axis where the first and second mount portions are secured. At least one cushion may further be disposed between the mount first and second portions.

The at least one cushion may have a first portion with an edge sealing the space between one of the opposite edge portions of the first and second mount portion, and the cushion may have a second portion with an edge sealing the space between the other of the opposite edge portions of the first and second mount portions. The first and second cushion portions may be separate pieces. The cushion may also be a single piece, further including a third portion for connecting the first and second cushion portions together. The third portion of the cushion may further include at least one passageway for connecting the housing and handle passageways.

### Brief Description of the Drawings

The features of the invention believed to be novel and the elements characteristic of the invention are set forth in the appended claims. The figures are for illustration purposes only and are not drawn to scale. The invention itself, however, both as to organization and method of operation, may best be understood by reference to the detailed description which follows taken in conjunction with the accompanying drawings in which:
Figs. 1 and 2 are cross sectional views of a prior art stunner catch system in hold and release positions, respectively.
Fig. 3 is a side cross-sectional view of an animal stunner with the catch hold position, with valves in neutral position, with the air supply pressurized and prior to firing.
Fig. 4 is a side cross-sectional view of the animal stunner of Fig. 3 with the catch release position, with valves in the firing position.
Fig. 5 is a side cross-sectional view of the animal stunner of Fig. 3 with the stunning rod in the end-of-stroke position.
Fig. 6 is a side cross-sectional view of the animal stunner of Fig. 3 with the air in main valve in the reverse position to retract the stunning rod.
Fig. 7 is an enlarged cross-sectional view of the animal stunner catch system shown in the hold position of Fig. 3, which is not part of the invention but represents background art that is useful for the understanding of the invention.
Fig. 8 is an enlarged cross-sectional view of the animal stunner catch system shown in the released position of Fig. 4, which is not part of the invention but represents background art that is useful for the understanding of the invention.
Fig. 9 is a perspective view of one example of the stunning rod, which is not part of the invention but represents background art that is useful for the understanding of the invention.
Fig. 10 is a cross sectional view of one example of the stunning rod of Fig. 9, which is not part of the invention but represents background art that is useful for the understanding of the invention.
Fig. 11 is a perspective view of the catch piston, which is not part of the invention but represents background art that is useful for the understanding of the invention.
Fig. 12 is a side elevational view of the catch piston shown in Fig. 11, which is not part of the invention but represents background art that is useful for the understanding of the invention.
Fig. 13 is a side cross sectional view of the catch piston shown in Fig. 11, which is not part of the invention but represents background art that is useful for the understanding of the invention.
Fig. 14 is a side elevational view of a catch according to the present invention, which is not part of the invention but represents background art that is useful for the understanding of the invention.
Fig. 15 is a cross sectional view of the catch shown in Fig. 14, which is not part of the invention but represents background art that is useful for the understanding of the invention.
Fig. 16 is a perspective view of the catch shown in Fig. 14, which is not part of the invention but represents background art that is useful for the understanding of the invention.
Fig. 17 is an end elevational view of four of the catches shown in Fig. 14 arrayed in the hold position around the longitudinal axis of the stunning rod, which is not part of the invention but represents background art that is useful for the understanding of the invention.
Fig. 18 is a top elevational view of the catch pivot ring, which is not part of the invention but represents background art that is useful for the understanding of the invention.
Fig. 19 is a side cross sectional view of the catch pivot ring shown in Fig. 18, which is not part of the invention but represents background art that is useful for the understanding of the invention.
Fig. 20 is a perspective view of the catch pivot ring shown in Fig. 18, which is not part of the invention but represents background art that is useful for the understanding of the invention.
Fig. 21 is a perspective view of the catch support according, which is not part of the invention but represents background art that is useful for the understanding of the invention
Fig. 22 is a top elevational view of the catch support shown in Fig. 21, which is not part of the invention but represents background art that is useful for the understanding of the invention.
Fig. 23 is a side elevational view of the catch support shown in Fig. 21, which is not part of the invention but represents background art that is useful for the understanding of the invention.
Fig. 24 is a side cross sectional view of the catch support shown in Fig. 21, which is not part of the invention but represents background art that is useful for the understanding of the invention.
Fig. 25 is a partial cross sectional view of the housing of the stunner of Figs. 3-6 normal to its longitudinal axis, showing the inner and return air chambers along lines 25-25 of Figs. 3-6, which is not part of the invention but represents background art that is useful for the understanding of the invention.
Fig. 26 is a perspective view of another embodiment of a stunner, without the auxiliary trigger in the rear handle.
Fig. 27 is a cross sectional view of the handle grip of the stunner of Fig. 26.
Fig. 28 is a perspective view of an embodiment of a mount according to the invention, employed between the main handle and main valve body of the stunner .
Fig. 29 is an exploded perspective view of the handle mount of Fig. 28
Fig. 30 is a cross sectional view of the mount of Fig. '28 showing the anti-shock members.
Fig. 31 is a bottom view of an embodiment of the main handle and mount of the present invention and the stunner, showing different fixed orientations of the main handle and trigger.
Fig. 32 is a cross-sectional view through the body of the stunning rod, which is not part of the invention but represents background art that is useful for the understanding of the invention, showing the different radii of and widths between the opposing sides.
Fig. 33 is a frontal view of the stunning rod of Fig. 32, which is not part of the invention but represents background art that is useful for the understanding of the invention.
Fig. 34 is a frontal view of the stunning rod of Fig. 32 with a piston, which is not part of the invention but represents background art that is useful for the understanding of the invention.
Fig. 35 is a rear perspective view of the stunning rod and piston of Fig. 34, which is not part of the invention but represents background art that is useful for the understanding of the invention.
Fig. 36 is a front perspective view of the stunning rod and piston of Fig. 35, which is not part of the invention but represents background art that is useful for the understanding of the invention.
Fig. 37 is an exploded side view of the stunning rod of Fig. 35 with a hardened tip and rearward end catch lip both attached to the rod by a screw, which is not part of the invention but represents background art that is useful for the understanding of the invention.
Fig. 38 is an exploded side view of an alternate embodiment of the stunning rod of Fig. 37 with the rearward end catch lip attached via a threaded end post, which is not part of the invention but represents background art that is useful for the understanding of the invention.
Fig. 39 is a longitudinal cross-sectional view of the stunning rod and piston of Fig. 35, which is not part of the invention but represents background art that is useful for the understanding of the invention.
Fig. 40 is a side view of the assembled stunning rod of Fig. 37, which is not part of the invention but represents background art that is useful for the understanding of the invention.
Fig. 41 is a rear view of the stunning rod and piston of Fig. 35, which is not part of the invention but represents background art that is useful for the understanding of the invention.
Fig. 42 is a side view of the stunning rod and piston of Fig. 37, which is not part of the invention but represents background art that is useful for the understanding of the invention, with the forward end within the outer housing nose of the stunner.
Fig. 43 is a cross-sectional view of the front face of the stunning rod of Fig. 42 within the outer housing nose, along lines A-A, which is not part of the invention but represents background art that is useful for the understanding of the invention.
Fig. 44 is a cross-sectional side view of an alternate embodiment of the stunning rod of Figs. 32-43, which is not part of the invention but represents background art that is useful for the understanding of the invention.
Fig. 45 is a perspective view of the alternate embodiment stunning rod of Fig. 44, which is not part of the invention but represents background art that is useful for the understanding of the invention.
Fig. 46 is a top view of the hardened tip of the alternate embodiment stunning rod of Fig. 37, which is not part of the invention but represents background art that is useful for the understanding of the invention.
Fig. 47 is a perspective view of the hardened tip of Fig. 46, which is not part of the invention but represents background art that is useful for the understanding of the invention.
Fig. 48 is a longitudinal cross-sectional view of the hardened tip of Fig. 46, which is not part of the invention but represents background art that is useful for the understanding of the invention.
Fig. 49 is an exploded top perspective view of an alternate embodiment of the handle mount of Fig. 28 employed between the main handle and main valve body of the stunner.
Fig. 50 is an exploded front view of the handle mount embodiment of Fig. 49.
Fig. 51 is an exploded bottom perspective view of the handle mount embodiment of Fig. 49.
Fig. 52 is a top perspective view of the handle mount embodiment of Fig. 49.
Fig. 53 is a top view of the handle mount embodiment of Fig. 49.
Fig. 54 is a bottom perspective view of the handle mount embodiment of Fig. 49.
Fig. 55 is a bottom view of the handle mount embodiment of Fig. 49.
Fig. 56 is a side cutaway view of the handle mount embodiment of Fig. 49 installed on the stunner, along lines 56-56 of Fig. 57.
Fig. 57 is a rear cutaway view of the handle mount embodiment of Fig. 49 installed on the stunner, along lines 57-57 of Fig. 56.
Fig. 58 is a top perspective view of the anti-shock members of the handle mount embodiment of Fig. 49.
Fig. 59 is a bottom perspective view of the anti-shock members of Fig. 58. JVS 120137099
Fig. 60 is a top perspective view of an embodiment of the anti-shock members of Fig. 58, where the top and bottom planar surfaces of the anti-shock members are angled to permit the handle mount to be installed on the stunner at an angle other than 90°.
Fig. 61 is a bottom perspective view of the anti-shock members of Fig. 60.
Fig. 62 is a side view of the handle mount embodiment of Fig. 49 installed on the stunner with the anti-shock members of Fig. 60.
Fig. 63 is a side cutaway view of the handle mount and stunner assembly of Fig. 62 along lines 63-63 of Fig. 64.
Fig. 64 is a bottom perspective view of the handle mount and stunner assembly of Fig. 62.
Fig. 65 is a top perspective view of the handle mount and stunner assembly of Fig. 62.
Fig. 66 is an exploded top perspective view of yet another embodiment of the handle mount of Fig. 28 employed between the main handle and main valve body of the stunner.
Fig. 67 is an exploded rear view of the handle mount embodiment of Fig. 66.
Fig. 68 is an exploded bottom perspective view of the handle mount embodiment of Fig. 66.
Fig. 69 is a rear perspective view of the handle mount embodiment of Fig. 66.
Fig. 70 is a top view of the handle mount embodiment of Fig. 66.
Fig. 71 is a bottom perspective view of the handle mount embodiment of Fig. 66.
Fig. 72 is a bottom view of the handle mount embodiment of Fig. 66.
Fig. 73 is a side view of the handle mount embodiment of Fig. 66 installed on the stunner.
Fig. 74 is a side cutaway view of the handle mount embodiment of Fig. 66 installed on the stunner along lines 74-74 of Fig. 75.
Fig. 75 is a top perspective view of the handle mount embodiment of Fig. 66 installed on the stunner.
Fig. 76 is a bottom perspective view of the handle mount embodiment of Fig. 66 installed on the stunner.
Fig. 77 is side exploded view of an alternate embodiment of the auxiliary handle grip of Fig. 27, which is not part of the invention but represents background art that is useful for the understanding of the invention, employing a re-positionable trigger and anti-shock cushions.
Fig. 78 is an exploded top perspective view of the auxiliary handle embodiment of Fig. 77, which is not part of the invention but represents background art that is useful for the understanding of the invention.
Fig. 79 is a side view of the auxiliary handle embodiment of Fig. 77, which is not part of the invention but represents background art that is useful for the understanding of the invention, with the trigger positioned in a downwards direction.
Fig. 80 is a side view of the auxiliary handle embodiment of Fig. 77, which is not part of the invention but represents background art that is useful for the understanding of the invention, with the trigger positioned in an upwards direction.
Fig. 81 is a side view of the auxiliary handle embodiment of Fig. 77, which is not part of the invention but represents background art that is useful for the understanding of the invention, with the valve removed and the handle pulled out so that the spline is visible, thus permitting rotation of the handle.
Fig. 82 is a top perspective view of an end cap, which is not part of the invention but represents background art that is useful for the understanding of the invention, used in an embodiment of the auxiliary handle for the stunner.
Fig. 83 is a bottom perspective view of the end cap of Fig. 82, which is not part of the invention but represents background art that is useful for the understanding of the invention.
Fig. 84 is a top perspective view of cushion, which is not part of the invention but represents background art that is useful for the understanding of the invention, used in an embodiment of the auxiliary handle for the stunner.
Fig. 85 is a bottom perspective view of the cushion of Fig. 84, which is not part of the invention but represents background art that is useful for the understanding of the invention.
Fig. 86 is a perspective view of an embodiment of the auxiliary handle for the stunner, which is not part of the invention but represents background art that is useful for the understanding of the invention, using the end cap of Fig. 82 and the cushion of Fig. 84.
Fig. 87 is a perspective view of an embodiment of the stunner, which is not part of the invention but represents background art that is useful for the understanding of the invention, using a cushion mount for the main handle and an auxiliary handle.

### Description of Exemplary Embodiment(s)

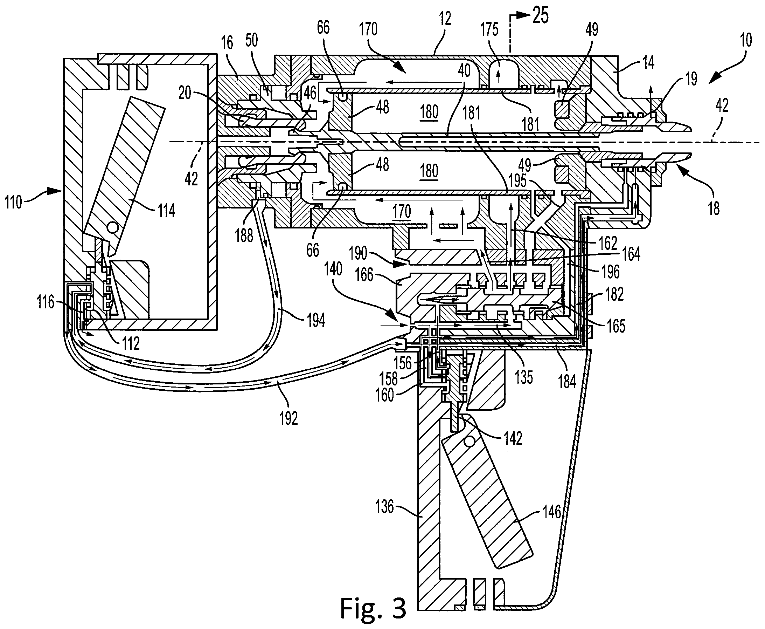

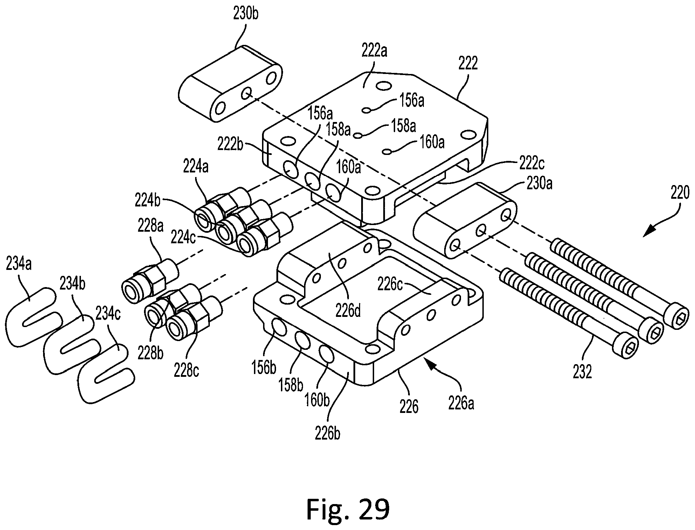

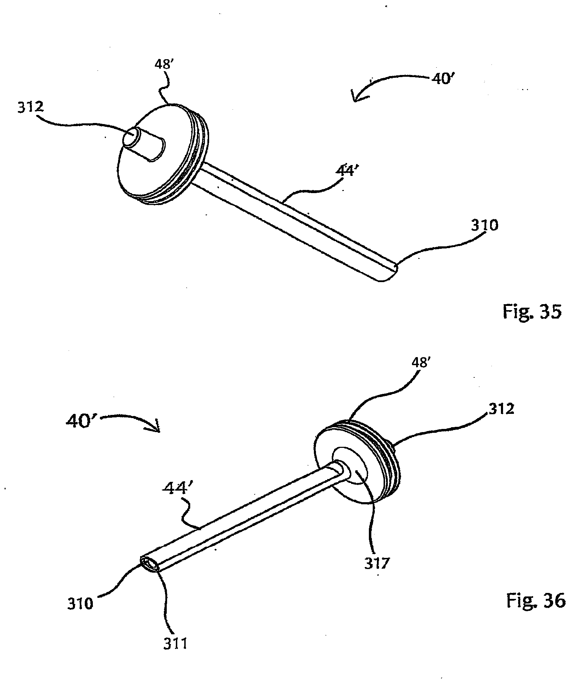

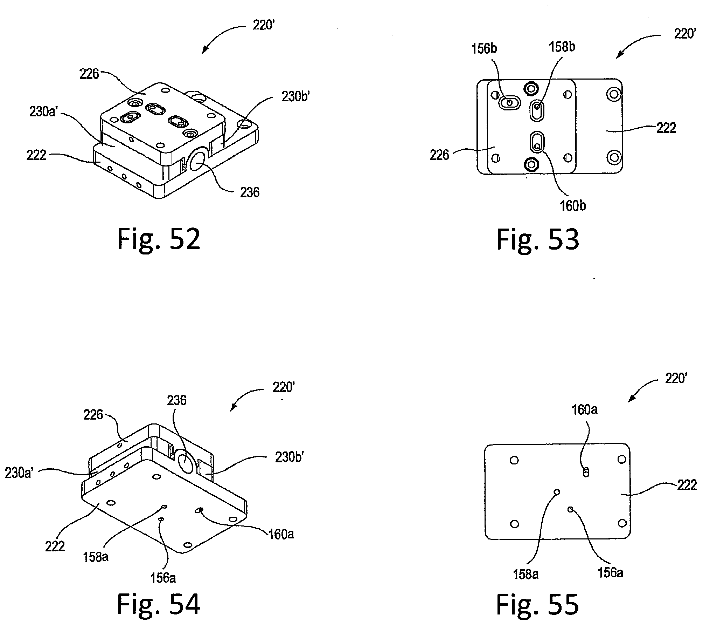

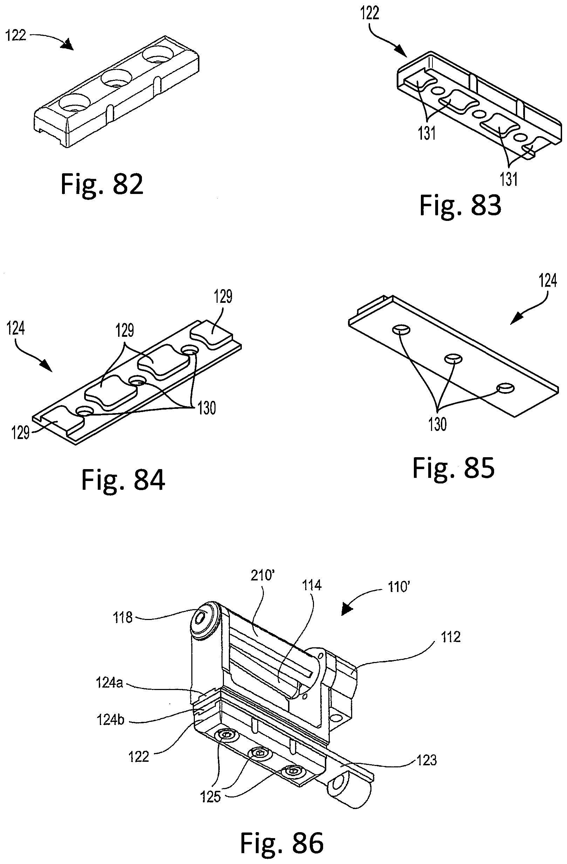

In describing the embodiments of the present invention, reference will be made herein to Figs. 3-87 of the drawings in which like numerals refer to like features of the invention.

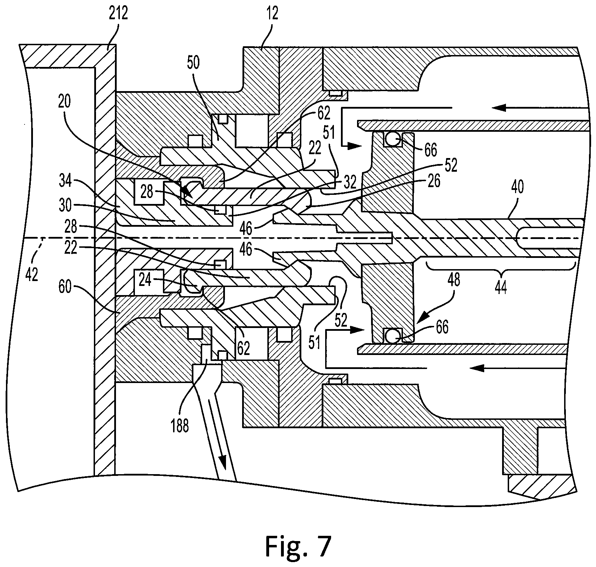

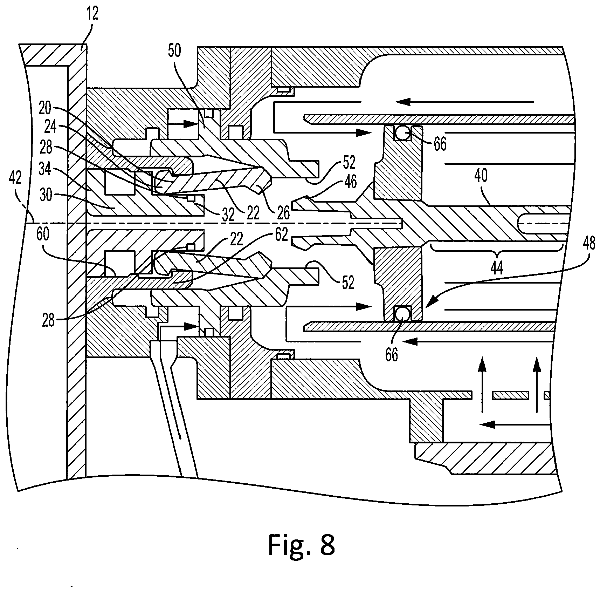

Structure and operation of the exemplary animal stunner 10 is shown in general in Figs. 3-8. The stunner 10 includes an outer elongated hollow housing 12, an outer housing nose or front end 14, a tail end 16, a stunning rod 40 and a catch 20 for holding and releasing the stunning rod 40. The portion of the animal stunner 10 having a catch is shown in detail in Figs. 7 and 8. The forward and rearward directions described herein are with respect to the stunner front end 14, and inward and outward directions described herein are with respect to the longitudinal axis 42. A piston 48 surrounded by an O-ring seal 66 slides within an inner cylindrical chamber 180 forward and rearward along axis 42, and carries stunning rod 40. The rearward end of stunning rod 40 ends in an outward extending lip 46 that is alternately held and released by catch 20, and the forward end of the stunning rod extends through head contact 18 to be driven toward the animal's head when the catch releases the stunning rod lip 46.

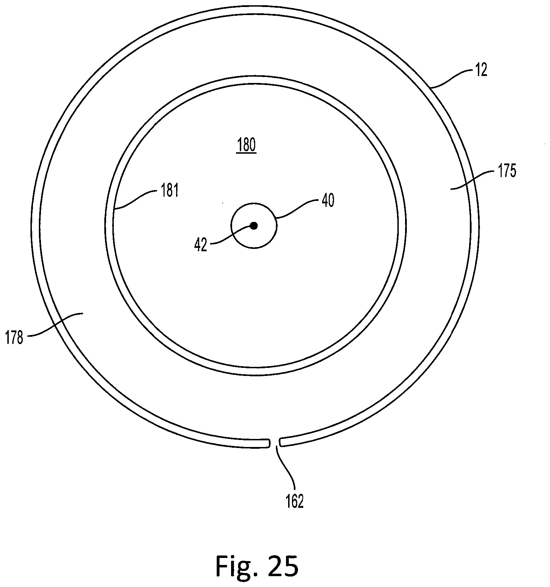

Stunner 10 may be operated by pressurized fluid, such as compressed air for the example shown. Outward of and shown as surrounding inner chamber 180 adjacent its central portion and rearward end is annular cylindrical first pressure or fire chamber 170. Compressed air can move freely and quickly between fire chamber 170 to the region of inner chamber 180 behind piston 48 upon operation of main valve 165. As shown in Fig. 25, annular cylindrical second pressure or return chamber 175 is also adjacent to, and shown as surrounding inner chamber 180 adjacent its central portion and forward end in the example of Figs. 3-6. A catch piston chamber 188 is located adjacent and around catch piston 50, which itself holds and releases catch 20. Chambers 170, 175, 180 and 188 may be pressurized to operate the stunner shown, as will be described in more detail below.

A first or main trigger 146 in main handle 136 is used to control a main handle valve 142 to the pressurized fluid, compressed air as used herein, to initiate the sequence that fires the stunning rod. For purposes of safety, to operate the exemplary stunner shown there are two additional conditions that must be met before the catch mechanism for the stunning rod is released. The head contact activator 18 located at the front of the tool must be in contact with the animal to receive the stroke and a second or auxiliary trigger 114 in auxiliary handle 110, which may be mounted at the rear of housing 12 perpendicularly to axis 42, must be manually operated. Although it is possible to construct and operate the stunner with only one of these three, at least two, and preferably all three, should be employed for safety.

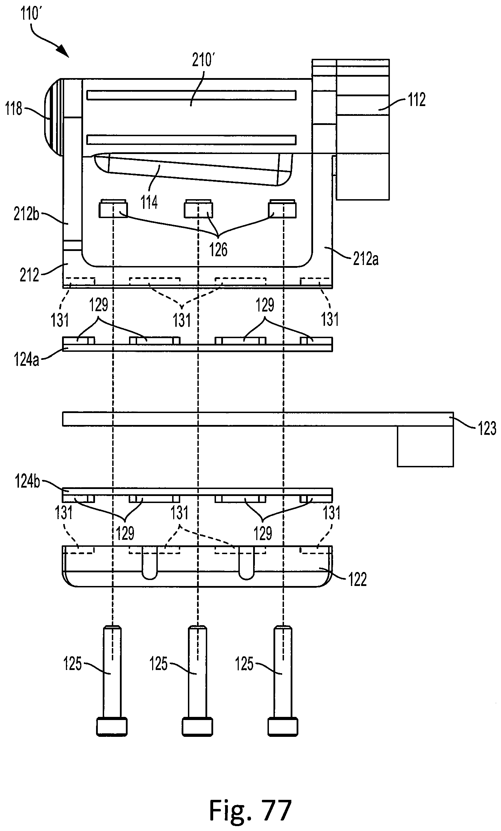

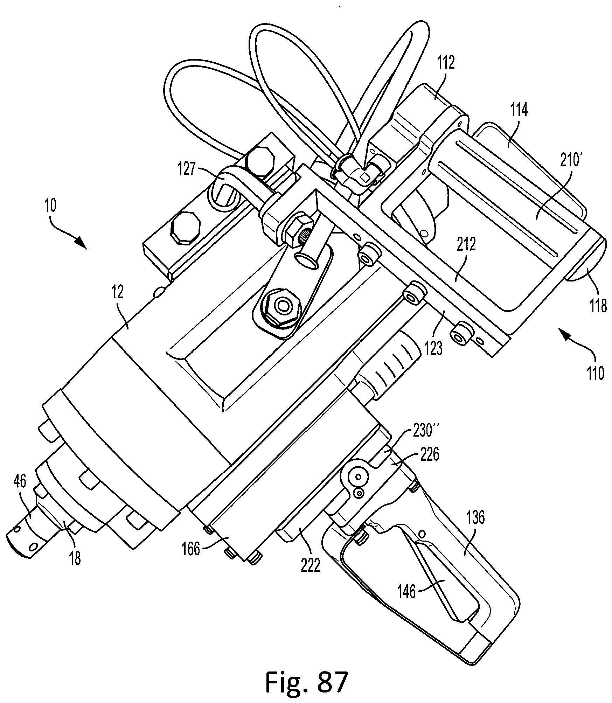

Alternatively, the auxiliary handle 110, which is not part of the invention but represents background art that is useful for the understanding of the invention, may be secured onto the housing 12 via a bracket arm 127 extending from a side of the housing 12, such as on the top side (Fig. 87). The bracket arm 127 attaches to and secures a handle mounting bracket 123. The handle mounting bracket 123 includes a plurality of openings which line up with openings on the auxiliary handle bracket 212 when the handle bracket 212 is disposed adjacent the planar surface of the handle mounting bracket 123. Instead of the construction shown in Fig. 87, where the auxiliary handle bracket 212 is mounted directly to the handle mounting bracket 123, one or more anti-shock cushions may be provided for the auxiliary handle. As shown in Figs. 77 and 82-86, handle bolts 125 extend through the openings in the handle mounting bracket 123 and handle bracket 212 and hold these two brackets together after lock nuts 126 are installed and tightened on the bolts 125. Handle cushions 124a, 124b may be disposed on one or both sides of the handle mounting bracket 123 to provide shock-absorbing properties when operating the stunner 10. An end plate 122 may also be affixed on the bottom side of the handle mounting bracket 123 by the handle bolts 125. Each cushion 124 may be made of rubber or other flexible polymer, and are shown as being rectangular with a desired thickness. Each cushion 124 has a flat surface, and the flat surfaces of cushions 124a and 124b are placed against the opposite sides of handle mounting bracket 123. Extending from the opposite surface of each cushion 124 are a plurality of spaced projections or bosses 129 that are square except for concave side edges facing each other. As shown in the embodiment, two full square bosses are provided in the central portion, and two half-sized bosses are provided at the opposite ends of the cushion. Three openings 130 are disposed between adjacent bosses for bolts 125. These full and half-size bosses 129 of cushions 124a, 124b are received into comparably sized openings 131 in the adjoining surfaces of handle bracket 212 and end plate 122, respectively, and mounting bracket 123 is sandwiched between cushions 124a, 124b when assembled.

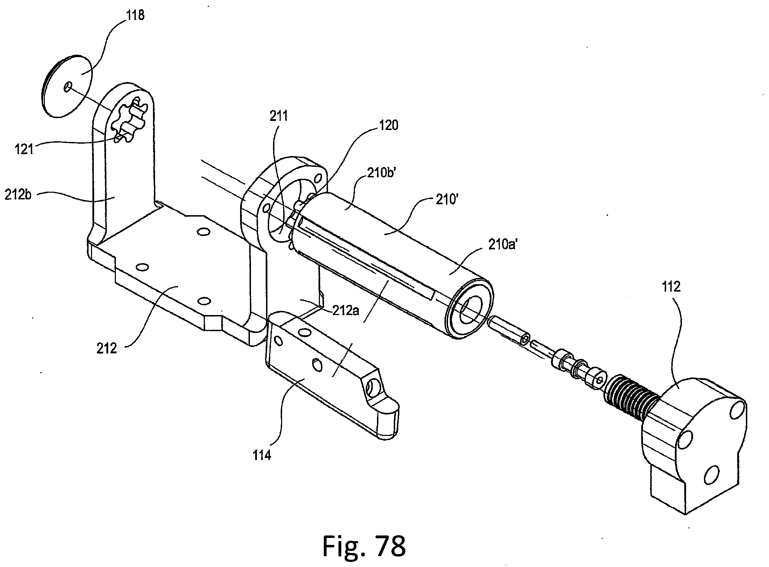

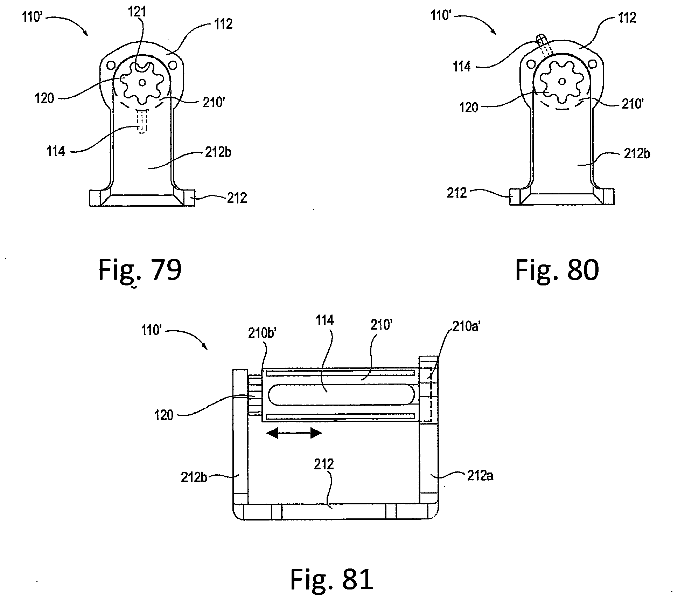

An embodiment of the auxiliary handle system 110', which is not part of the invention but represents background art that is useful for the understanding of the invention, allows for manual re-positioning of auxiliary trigger 114 by rotation of the handle 210', as shown in Figs. 78-81. Cylindrical auxiliary handle 210' includes auxiliary trigger 114 extending from a side thereof, which pivots when depressed to activate auxiliary handle valve 112 mounted on the outside of arm 212a of handle bracket 212. Opposite ends 210a' and 210b' of auxiliary handle 210' are secured to parallel bracket arms 212a and 212b. Extending axially from handle end 210b' are splines 120, which comprise a plurality of spaced axial keys projecting radially outwardly from the handle longitudinal axis, which splines are machined into or attached to the handle shaft (Fig. 78). Corresponding spaced grooves extending radially outwardly from the longitudinal axis are formed in a bore 121 of bracket arm 212b, so that bore 121 mates with splines 120 on the handle 210'. Splines 120 perform the same function as a key in fixing the relative position of auxiliary handle 210' and auxiliary trigger 114 with respect to the handle bracket 212 and the stunner housing 12. Alternatively, any projection on one of the auxiliary handle and bracket mating with a corresponding opening on the other of auxiliary handle and bracket may be used. To adjust the position of auxiliary trigger 114, valve 112 and auxiliary handle washer 118 are first removed from the opposite outside edges of mounting bracket arms 212a, 212b respectively (Figs. 77 and 78), typically by using an Allen key or screwdriver to unscrew bolts extending through the washer 118 and arm 212b, and through the valve 112 and arm 212a. Once the washer 118 and valve 112 are removed from the auxiliary handle 210', handle end 210a' may freely slide along its longitudinal axis through opening 211 (Fig. 78) in bracket arms 212a (Fig. 81). Sliding the handle shaft 210' in a direction away from bracket arm 212b disengages splines 120 from the grooves in bore 121 of bracket arm 212b. Handle shaft end 210a' traverses from within the inside edge of bracket arm 212a to the outside edge of bracket arm 212a when sliding the handle shaft 210' in a direction away from bracket arm 212b.

Once the handle 210' is pulled away from bracket arm 212b so that splines 120 are removed from opening 121 and exposed, the handle may be rotated clockwise or counterclockwise along its longitudinal axis to reposition trigger 114 in a different position relative to bracket 212 and stunner housing 12. End users may adjust the handle shaft so that trigger 114 points inward toward the housing 12 of the stunner 10 (Fig. 79), or outward away from the housing 12 (Fig. 80), or any other desired position. After handle 210' is rotated to place trigger 114 in the desired position, the handle splines 120 may be reinserted into and reengaged with the grooves in spline bore 121 by pushing the handle shaft 210' in a direction towards bracket arm 212b. Re-installation of washer 118 and valve 112 onto the ends of bracket arms 212b, 212a, respectively, will secure handle 210' in place and prevent any further rotational movement, thus maintaining the desired position of trigger 114.

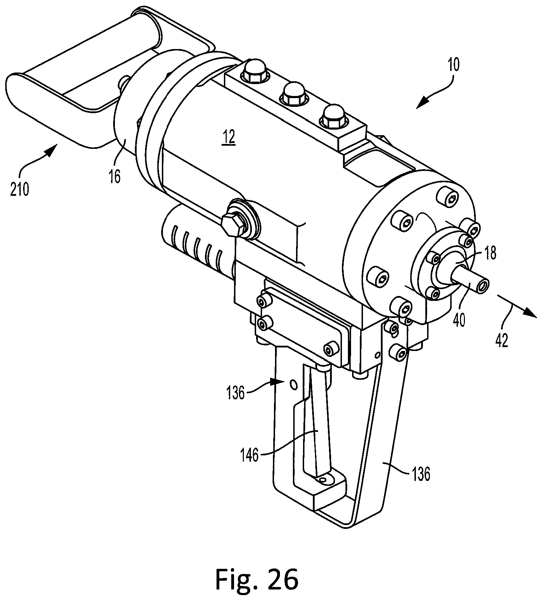

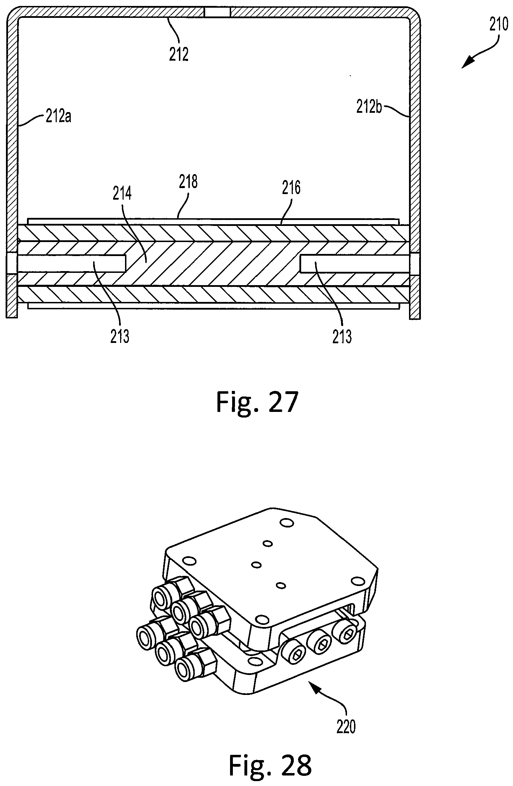

A stunner employing main trigger 146, controlling main handle valve 142, and head contact activator 18 is shown in Fig. 26. In this embodiment, a second or auxiliary trigger is not provided, and instead a grip handle 210 is positioned at the tail end 16 of housing 12. Grip handle 210 as shown in Fig. 27 comprises a mounting bracket 212 and an inner handle bar 214 secured by a pair of connecting rods 213 extending inwardly from a pair of mounting bracket arms 212a, 212b. A flexible mount 216 of rubber or other polymer surrounds inner bar 214 to provide cushioning to outer handle tube 218 disposed thereover. In this embodiment the operator may hold grip handle 210 in one hand while holding main handle 136 in the other. While depressing and holding trigger 146 in main handle 136, the operator may then displace head contact activator 18 against the head of the animal to fire the stunning rod.

Fig. 3 shows the animal stunner 10 with the catch 20 hold position, with valves in the neutral position, and with the air supply pressurized and prior to firing. An air hose (not shown) is attached to the supply port 140 on the main chamber valve body 166, and main valve body 166 is pressurized by the compressed air. Main valve 165 within valve body 166 is positioned to the right by spring (not shown) pressure and pressure force conveyed from air passages 158 (connected to supply port 140) through the main handle valve 142 and then through passageway 156. The main valve spool 165 in this position will simultaneously pressurize, via passageways 135, 162 and 164, the fire chamber 170 and also the smaller return chamber 175, both at a slower fill rate. The stunning rod piston 48 is fully pressurized by air flow from fire chamber 170 behind the piston, and retained from movement by the closed catch 20 assembly holding stunning rod lip 46, as will be explained further below. The main handle valve 142 is in the neutral position and not yet activated by main trigger 146, and valve 142 is extended by spring (not shown) pressure downward, so that the air passage via passageway 184 to the head contact 18 is vented through the main handle valve 142. The head contact 18 is extended by spring (not shown) pressure forward (rightward). Any air pressure on the extend side of the catch piston 50 in chamber 188 is vented via passageways 194 through the auxiliary handle vent 116, and any air pressure in passageway 192 is vented via passageway 184 through the head contact vent 19. The area under and behind the stunning rod piston 48 is vented through the main valve body 166 into the exhaust port 190. The stunner will not fire in this position, wherein main trigger 146, auxiliary trigger 114 and head contact 18 are not depressed.

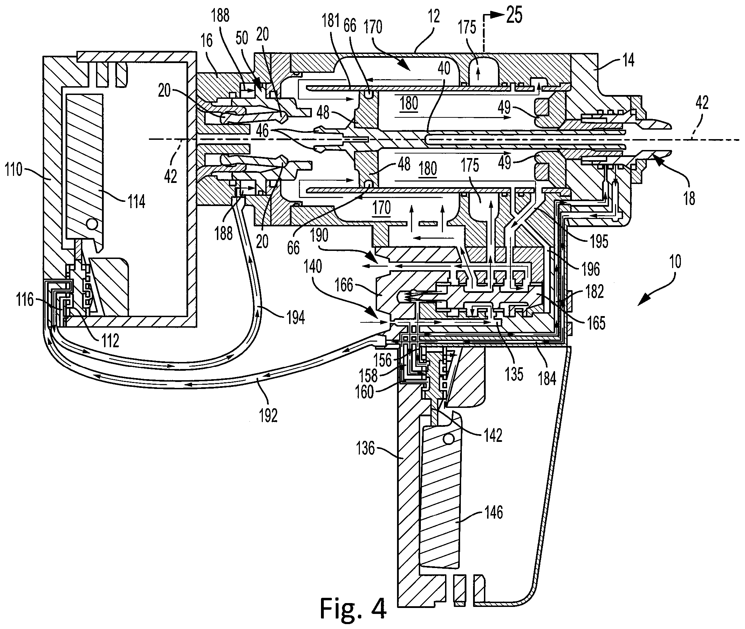

Fig. 4 shows the animal stunner with the catch 20 release position, with valves 142, 165, 112 and 18 in.the firing position. To commence the firing sequence, the main handle valve 142 is activated by the operator depressing main trigger 146 with one hand, head contact 18 is activated by the operator pressing against the animal's head to move the contact rearward (leftward), and auxiliary handle valve 112 is activated by the operator depressing auxiliary trigger 114 with the other hand. As the main handle valve moves into the upward position, air passage from the main handle valve 142 to main valve spool (spring end) is exhausted via passageway and air passage from the main handle valve 142 to head contact 18 is pressurized via passageway 182. Compressed air also flows via air passage 194 to the catch piston cylinder chamber 188 after flow through the head contact valve 18, passageway 184 and passageway 192 through the auxiliary handle valve 112. As a result of head contact 18 being depressed and auxiliary handle valve 112 being pressurized, catch piston 50 is moved by the compressed air in chamber 188 and extends forward (rightward) to its limit and opens the catches 20. As a result, stunning rod 40 is released and moves forward (rightward) at a high rate of speed, while the air in chamber 180 under and forward of the stunning rod piston 48 is exhausted through passageway 195 and the main valve body 166 exhaust port 190.

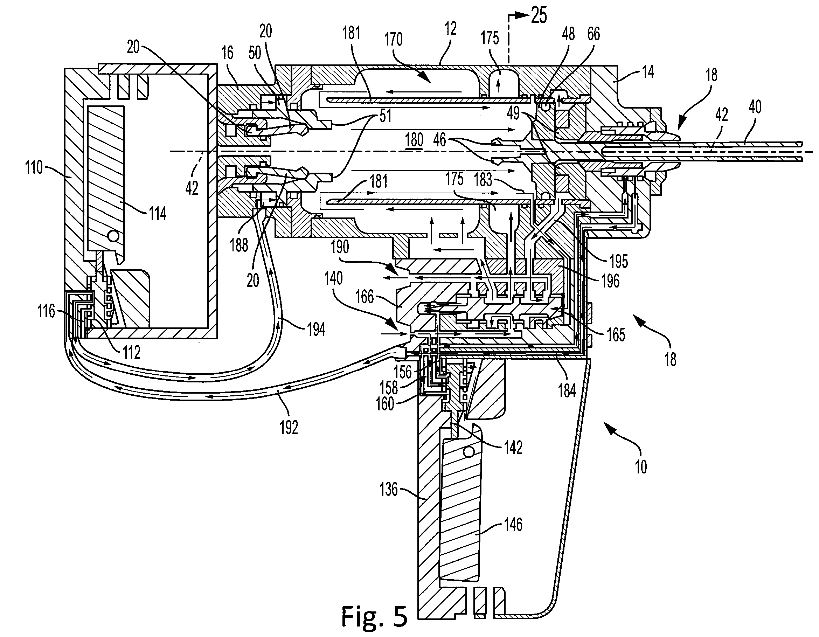

Fig. 5 shows the animal stunner 10 with the stunning rod 40 in the full forward, end-of-stroke position. The stunning rod stroke is stopped by the annular cushions 49 next to and inside of the nose housing 14. In this position the stunning rod piston seal 66 extends forward and beyond the small holes 183 in the liner 181 of chamber 180 allowing air flow into the main valve reverse passage 196 to the bottom (rightward) end of the main valve spool 165. As main valve 165 is pressurized, the spool commences moving upward (leftward) against the pressure of the spring to reverse the flow of air to the stunning rod piston 48.

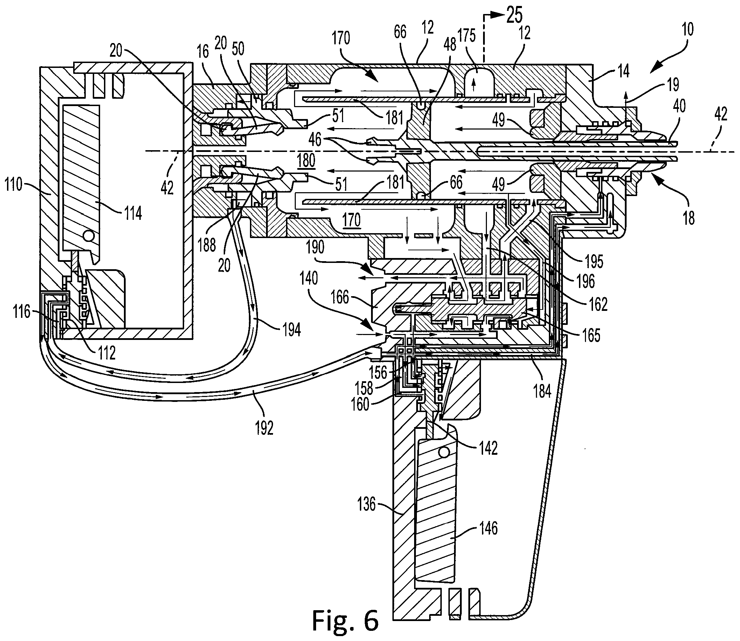

Fig. 6 shows the animal stunner near the end of the firing sequence with the air in main valve 165 moved into the reverse position to retract the stunning rod, as a result of compressed air flow from reverse passage 196 (Fig. 5). Both main handle valve 142 and auxiliary handle valve 112 are still depressed and activated, but head contact 18 is released from the animal's head so that contact valve 18 returns to the forward (rightward) position. Main valve 165 reverse passage 196 is pressurized forcing the main valve spool to move upward (leftward) against the pressure of the spring, so that the main valve body air flow is reversed. As this occurs, fire air chamber 170 is exhausted through the main valve body 166 into the exhaust port 190, and air flow is reversed via passage 194 from the catch piston 50 chamber 188 through open auxiliary handle valve 112, passageways 192 and 184 and out through the head contact 18 vents 19 when the head contact 18 is released. The compressed air pressure immediately available from the return chamber 175 causes pressurized air to move freely and quickly to flow via passageways 162 (Figs. 6 and 25), main valve 165 and passageway 195 into the forward (rightward) end of chamber 180 (Fig. 6). Although return chamber 175 is volumetrically smaller and contains less pressurized fluid than fire chamber 170, it is sized to provide sufficient air to drive piston 48 and stunning rod 40 rearward. This use of compressed air from adjacent return chamber 175 reduces the volume of air needed as compared to prior art methods where the air to return the piston is supplied via internal passageways from the supply port. Instead of relying on a short, higher pressure blast of compressed air through the supply port at the same time the piston return cycle is initiated, the present stunner pre-supplies the compressed piston return air at the same time the fire chamber is pressurized, during the longer time available between operation cycles. This permits restriction orifices of desired sizes to be used at the supply port 140, thereby saving on total air volume usage by the stunner.

The pressurized air in chamber 180 forward end retracts the stunning rod 40 rearward (leftward) as shown in Fig. 6 until piston 48 contacts the forward end 51 of catch piston 50. As a result of the piston striking it, the catch piston 50 is retracted rearward (leftward) into the catch cylinder 188, which closes the catches 20 by forcing them inward to capture stunning rod lip 46, so that the stunning rod 40 is retained by the catches, as shown in Fig. 3.

When the main handle valve 142 is returned to neutral as a result of main trigger 146 being released and in the undepressed position (Fig. 3), air passage to main valve spool (spring end) is again pressurized, and shifts valve 165 to its original position. Both fire chamber 170 and return chamber 175 are again pressurized, air passage to the nose is exhausted via vent 19, auxiliary handle valve 112 returned to neutral as a result of auxiliary trigger 114 being released, any pressure is vented through vent 116 of the auxiliary handle valve 112, so that air passage to the catch piston 50 is vented two ways for safety, and will not fire again until the firing sequence is again started. The order of firing sequence makes no effect on the performance, and both triggers 146, 114 and the head contact 18 must be activated in any order before firing will occur in this embodiment.

Main handle 136 is shown in Figs. 3-6 as being secured directly to main valve body 166. To provide cushioning to mitigate any shock due to the firing of the stunning rod, and therefore reduce operator injury and increase operator comfort, there may be provided a cushion mount for main handle 136. Such a mount 220 is shown in Figs. 28-30 for insertion between main handle 136 and main valve body 166 at the lower end of housing 12. Cushion mount 220 includes a first or upper portion 222, which is connected or otherwise secured to the lower side of housing 12, and a second or lower portion 226, which is connected or otherwise secured to the upper end of main handle 136. Upper portion 222 includes passageways 156a, 158a, 160a which mate at upper surface 222a with passageways 156, 158, 160, respectively, (Figs. 3-6) opening from the lower end of main valve body 166. Passageways 156a, 158a, 160a connect through upper portion 222 at side surface 222b with fittings 224a, 224b, 224c, respectively. In lower portion 226 passageways 156b, 158b, 160b mate at lower surface 226a with passageways 156, 158, 160, respectively, (Figs. 3-6) opening from the upper end of main handle 136. Passageways 156b, 158b, 160b connect through lower portion 226 at side surface 226b with fittings 228a, 228b, 228c, respectively. Hoses or tubes 234a, 234b, 234c connect fittings 224a, 224b, 224c with fittings 228a, 228b, 228c, respectively.

Between mount upper portion 222 and a lower portion 226 there are provided a pair of anti-shock members 230a, 230b, which may be made of rubber cushions or other flexible polymer. Anti-shock members 230a, 230b may be in the configuration of elongated blocks (i.e., parallelepipeds) or other shapes disposed on either side between a central flange 222c extending downwardly from upper portion 222, and a pair of side flanges 226c, 226d extending upwardly from lower portion 226. One or more fasteners 232, here shown as three bolts, may extend in the same direction as or normal to longitudinal axis 42 into and through corresponding aligned openings in side flange 226c, anti-shock member 230a, central flange 222c, anti-shock member 230b and side flange 226d. The major surfaces of members 230a, 230b are contained in planes parallel to the longitudinal axis 42 of the housing 12. Except for the fasteners, anti-shock members 230a, 230b completely isolate mount upper portion 222 from mount lower portion 226, and absorb vibration and shock transmitted from the body of stunner 10 to main handle 136.

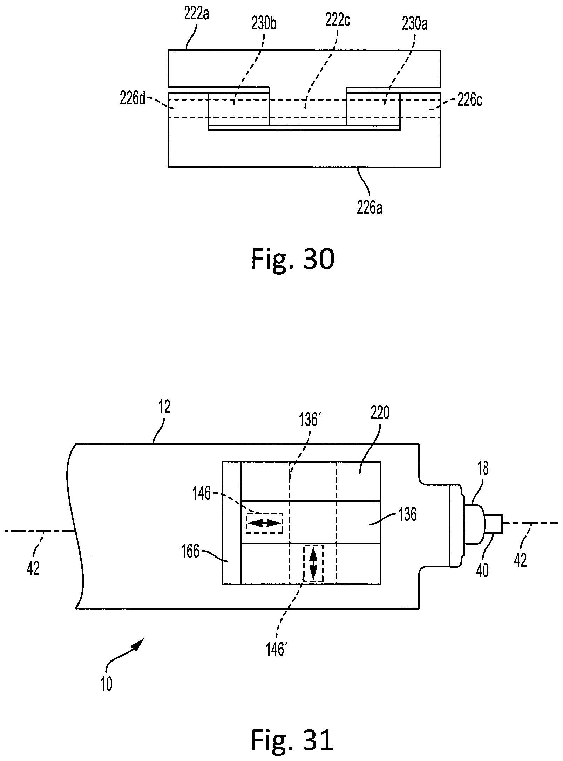

With or without the anti-shock members, mount 220 may be provided in different patterns of passageways 156a, 158a, 160a and/or passageways 156b, 158b, 160b, to connect to the main handle 136 and/or main valve body 166 at different orientations than the conventional one shown in the drawings, where the trigger 146 movement is aligned with the longitudinal axis 42 of the stunner housing 12. As shown in Fig. 31, this would permit handle 136 and trigger 146 movement to be mounted to main valve body 166 or housing 12 in a different fixed position and aligned to an orientation other than that of stunner longitudinal axis 42, for example, with handle 136' and trigger 146' movement in a direction 90° to axis 42. The different main handle orientations may accommodate different layouts in the plant operations or operator comfort, for example, due to pneumatic activation instead of mechanical activation of the valve with the trigger.

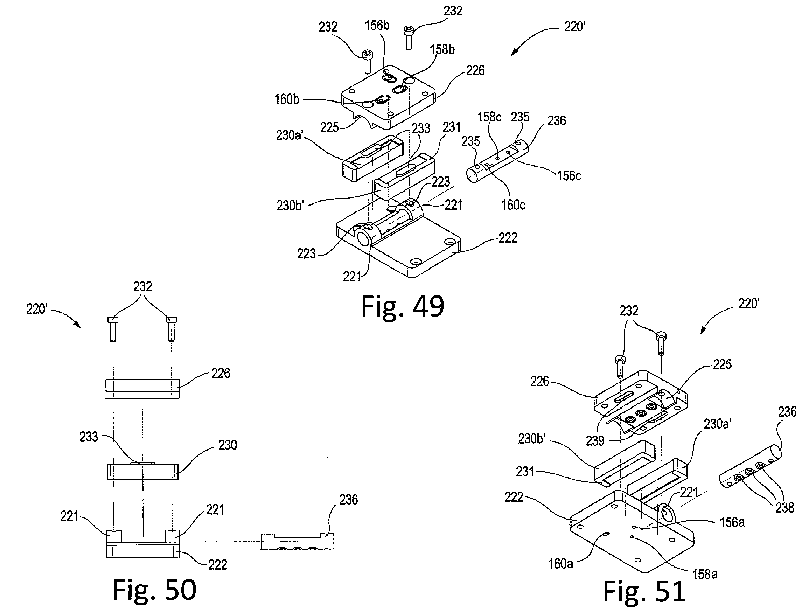

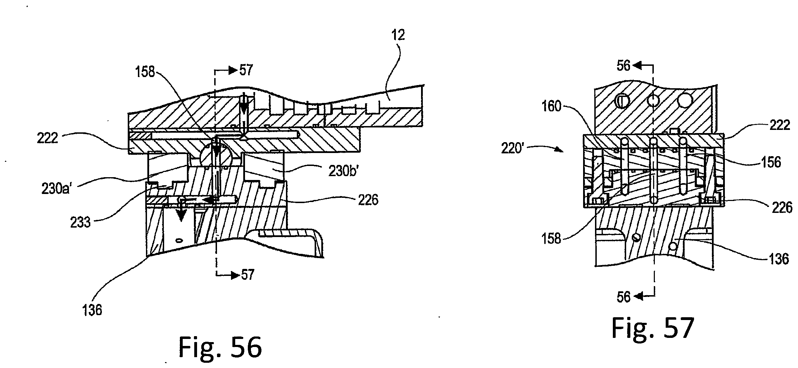

An alternate embodiment of the mount 220' is shown in Figs. 49-65 for insertion between main handle 136 and main valve body 166 at lower end of housing 12. This mount embodiment 220', which is shown inverted, includes a first or upper portion 222, which is connected or otherwise secured to the lower side of housing 12, and a second or lower portion 226, which is connected or otherwise secured to the upper end of main handle 136. Upper mount portion 222 includes passageways 156a, 158a, 160a which mate with passageways 156, 158, 160, respectively, opening from the lower end of main valve body 166 (Figs. 3-6). In lower mount portion 226 passageways 156b, 158b, 160b mate with passageways 156, 158, 160, respectively, (Fig. 57) opening from the upper end of main handle 136 (Figs. 3-6). In this cushion mount embodiment 220', upper portion 222 passageways 156a, 158a, 160a connect to lower portion 226 passageways 156b, 158b, 160b through passageways 156c, 158c, 160c, respectively, in central pin 236 (Figs. 49, 56 and 57)..

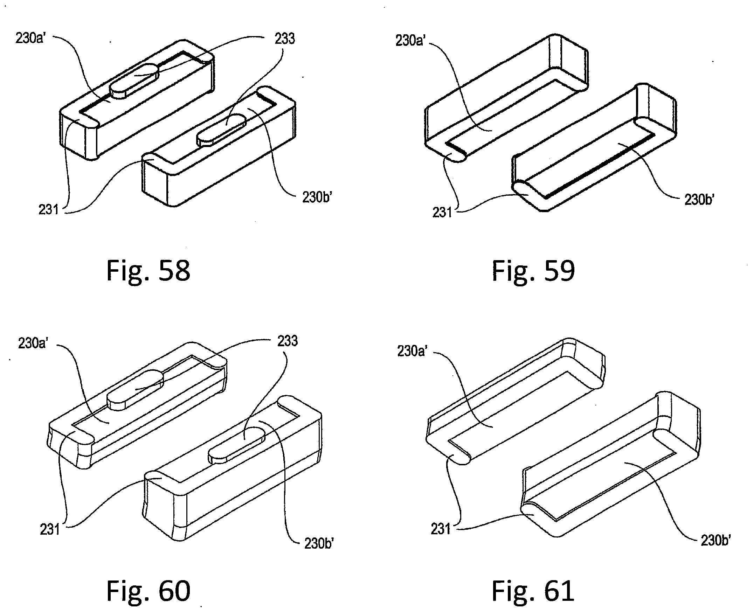

Central pin 236 is disposed between upper mount portion 222 and lower mount portion 226 along a central axis to secure the upper portion 222 and lower portion 226 together, and permits a pivoting motion between the mount portions 222, 226 (Figs. 49-51). Pin 236 is rotatably held in openings in cylindrical flanges 221 on opposite edges of upper mount 222. Passageways 156c, 158c, 160c are spaced along the length of central pin 236, with each passageway being sealed at its end to the corresponding upper and lower mount passageway by an O-ring 238, on the pin 236 and the lower mount 226 (Fig. 51). This creates an air-tight seal for each passageway 156, 158, 160 running through mount upper portion 222, central pin 236, and mount lower portion 226 (Figs. 49-51) to provide for flow of the pressurized fluid. Between mount upper portion 222 and mount lower portion 226 there is provided a pair of anti-shock members 230a', 230b', as shown in Figs. 58-59, which may be made of rubber cushions or any suitable flexible polymer. Anti-shock members 230a', 230b' may be in the configuration of elongated blocks (i.e., parallelepipeds) or other suitable shapes disposed on either side of central pin 236. Each anti-shock member is further fitted to the cushion mount 220' via a projection or boss 233 extending from the planar surface of each anti-shock member 230a', 230b'. These bosses 233 are sized to fit snugly into cushion mount grooves 239 formed into the inside planar face of cushion mount lower portion 226 (Fig. 51). Each anti-shock member 230a', 230b' includes lips 231 extending upward and downward from side planar surfaces. These lips 231 wrap substantially around the top and bottom surfaces along three outer sides and edges of anti-shock members 230a', 230b'.

Full assembly of cushion mount 220' includes securing anti-shock members 230a', 230b' into mount lower portion 226 by the bosses 233 fitting into grooves 239, then placing mount upper portion 222 on top of lower portion 226 and cushion mounts 230a', 230b'. The cushion mounts are of equal height so that the edges of upper and lower portions 222, 226 are parallel to each other. The central pin 236 is then placed between upper and lower mount portions 222, 226 along the common central axis to secure upper mount portion 222, anti-shock members 230a', 230b', and lower mount portion 226 together. Bolts or fasteners 232 are inserted through lower mount portion 226 and extend perpendicularly through slots 223 in cylindrical flanges 221 in upper portion 222, and are secured into threaded openings 235 at the opposite ends of pin 236 disposed along the shared central axis of the mount 220'. Lower mount 226 includes concave curved regions 225 that slide along the outer convex surfaces of cylindrical flanges 223 to permit pivoting between the upper and lower mount portions around pin 236.

A slight rocking motion is permitted around pin 236 between upper and lower mount portions 222, 226 after assembly, by alternate expansion and compression of anti-shock members 230a', 230b' on either side of the pin. Lips 231 on one longer side and two shorter sides of each anti-shock member 230a', 230b' fit tightly against the edges of the upper and lower mount portions 222, 226 and help prevent unwanted debris from entering the passageways and other parts of the interior of mount 220' while operating the stunner 10.

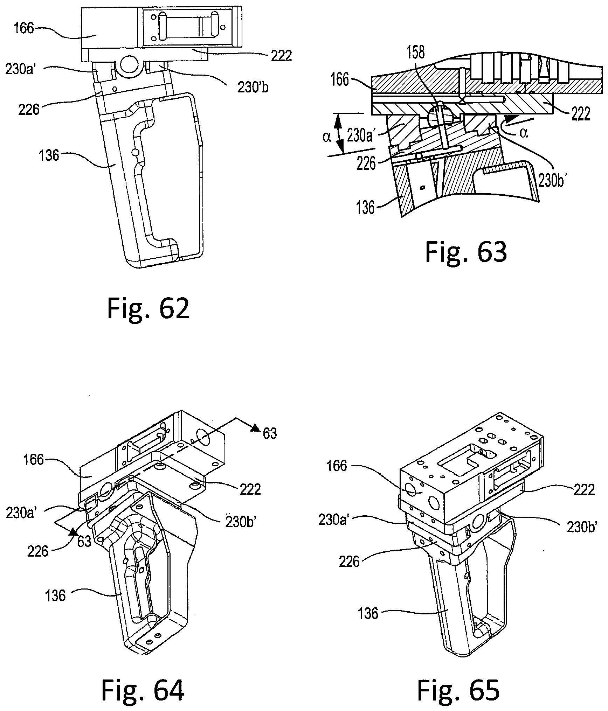

The pivoting connection between the upper and lower portions 222, 226 of cushion mount 220' permits the adjustment of the angle of main handle 136 by employing anti-shock members 230a', 230b' that are formed so that the top and bottom side edges of each member 230a', 230b' are angled with respect to each other to create a wedge-type shape. As shown in Figs. 60 and 61, the wedge shaped anti-shock members 230a', 230b' are of different heights at opposite ends as installed, and have tapered upper and lower surfaces, while still retaining boss 233 on the upper surface and lips 231 extending above and below around three sides. Figs. 62-66 show anti-shock members formed at angle ∞ (Fig. 63) between upper and lower mount portions 222, 226. Employing these wedged anti-shock members 230a', 230b' in cushion mount 220' allows for a connection between main handle 136 and valve body 166 at the lower end of the stunner housing at any desired angle.

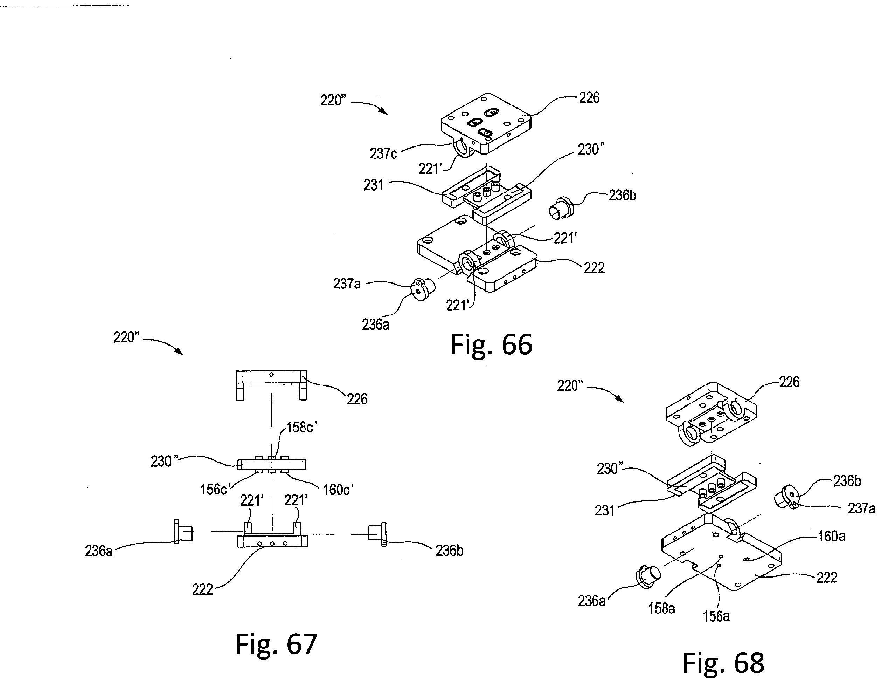

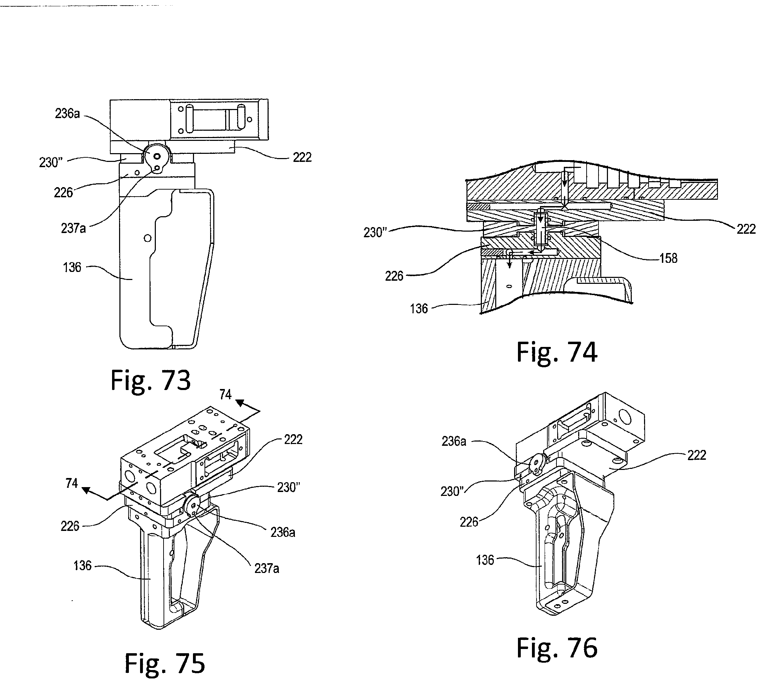

Still another cushion mount embodiment 220", which is not part of the invention but represents background art that is useful for the understanding of the invention, is shown in Figs. 66-76 for insertion between main handle 136 and valve body 166 of housing 12. In this embodiment, a singular anti-shock member 230" made of a rubber cushion or flexible polymer is disposed between mount upper and lower mount portions 222, 226. First and second portions of the anti-shock member 230" are disposed on either end, which have height and construction similar to the separate anti-shock cushions 230a, 230b of the previous embodiment, but are joined by a shared central portion in the center of the mount 220". Lips 231 again extend substantially around the outside edges of the top and bottom planar surfaces of the first and second portions of the anti-shock member 230", which prevent debris from collecting inside of the mount 220" during operation of the stunner 10. A third portion of the anti-shock member 230" is disposed between and connects the first and second portions, and. contains passageways 156c', 158c', 160c' formed therein for connecting the passageways 156a, 158a, 160a of mount upper portion 222 to passageways 156b, 158b, 160b of mount lower portion 226 (Figs. 66-68). Complete passageways 156, 158, 160 are thus formed once the assembled cushion mount 220" is installed between the main handle 136 and valve body 166 (Figs. 73-76).

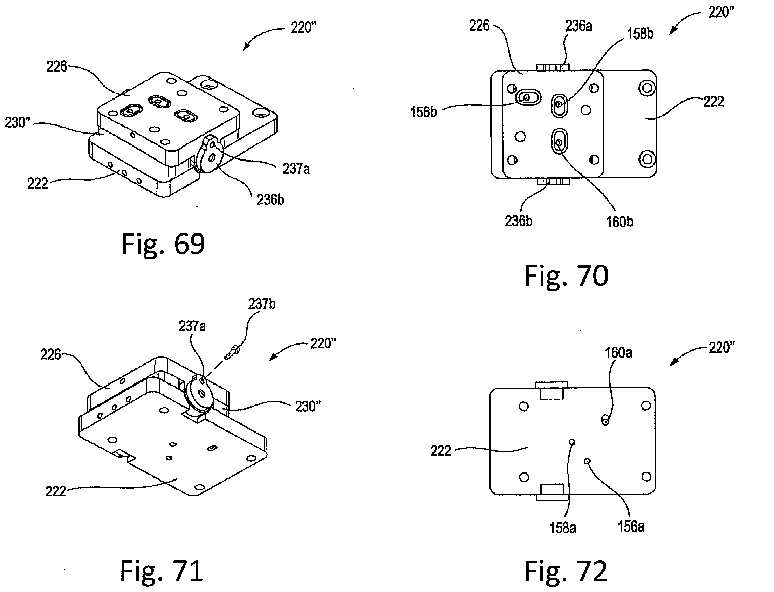

Full assembly of cushion mount 220" includes insertion of anti-shock member 230" between upper and lower mount portions 222 and 226, so that the passageways 156c', 158c', 160c' run along the shared central axis of mount 220". The planar edges of upper and lower mount portions 222, 226 run parallel to each other. Pins 236a, 236b are disposed in the openings of flanges 221' extending from both the lower and upper mount portions on opposite sides of the mount assembly 220" to secure the mount upper portion 222, anti-shock member 230", and mount lower portion 226 together (Figs. 66-71). Each pin 236a, 236b comprises a flange with a bore 237a for receiving a fastener 237b that extends through the width of the pin 236a, 236b flange into bores 237c in lower mount portion 226 (Fig. 66 and 71). Fastener 237b secures pins 236a, 236b in position to permit the upper and lower mount portions to pivotally rock against the first and second cushion portions of mount assembly 220". As with the previous embodiment, the first and second portions of anti-shock member 230" may be in the form of wedge-shaped cushions such as those in Figs. 60 and 61, so that main handle 136 may be secured at a desired angle with respect to housing 12.

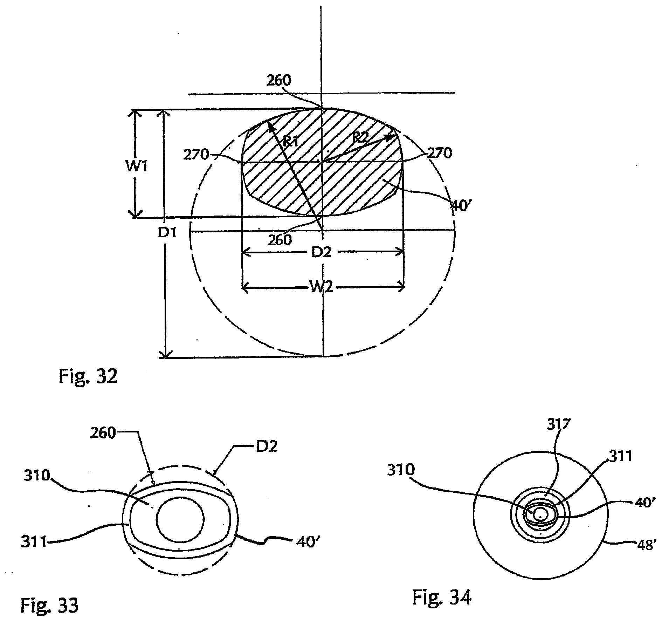

An alternate embodiment of a stunning rod useful in the stunner, which is not part of the invention but represents background art that is useful for the understanding of the invention is shown in Figs. 32-48. The alternate embodiment of stunning rod 40' depicted herein may be used in place of stunning rod 40 described previously, and comparable portions of the rod are numbered similarly, but with a prime mark.

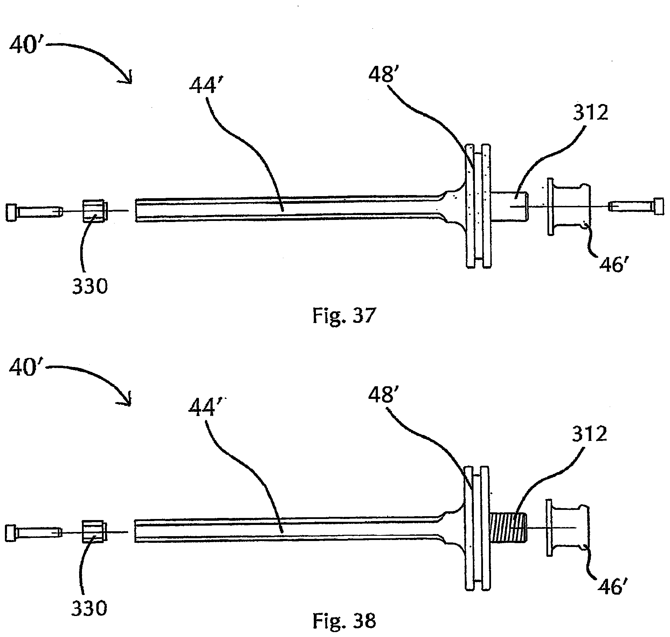

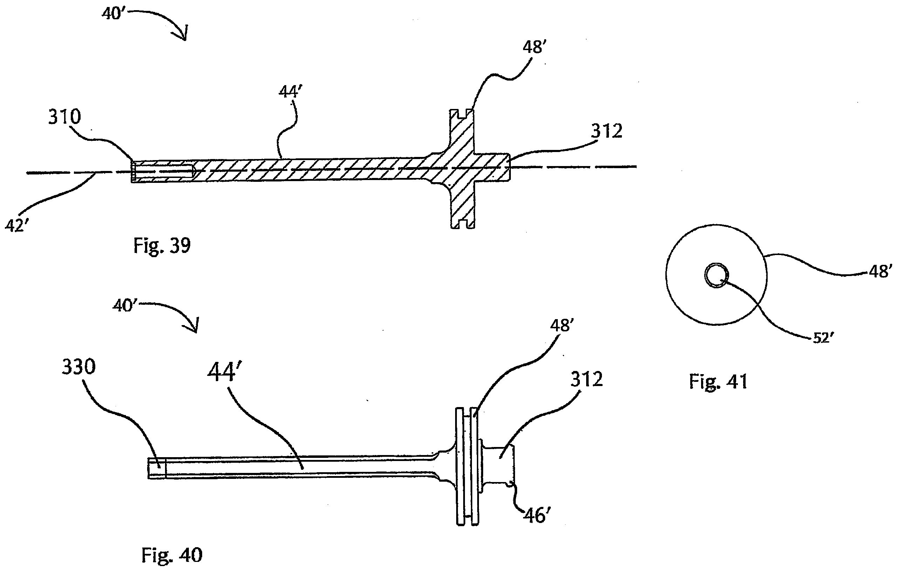

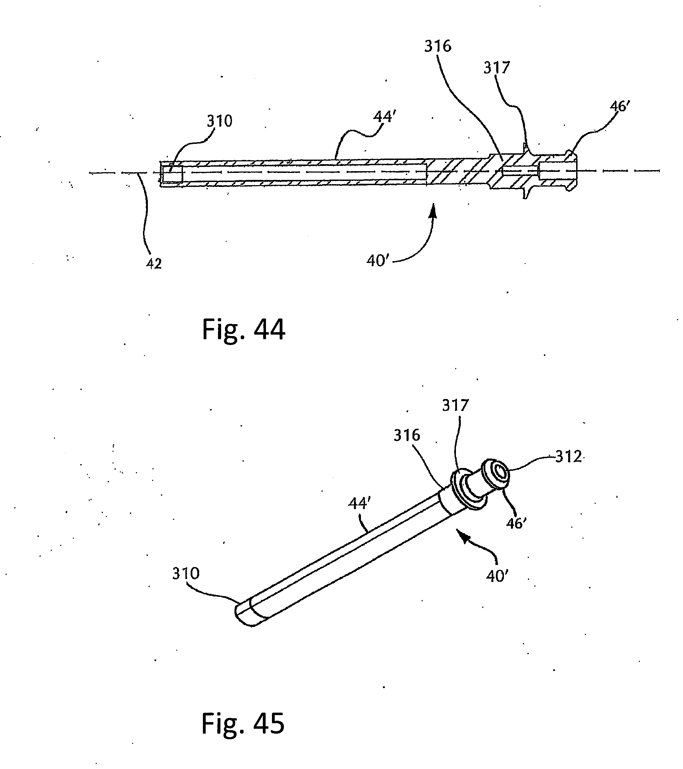

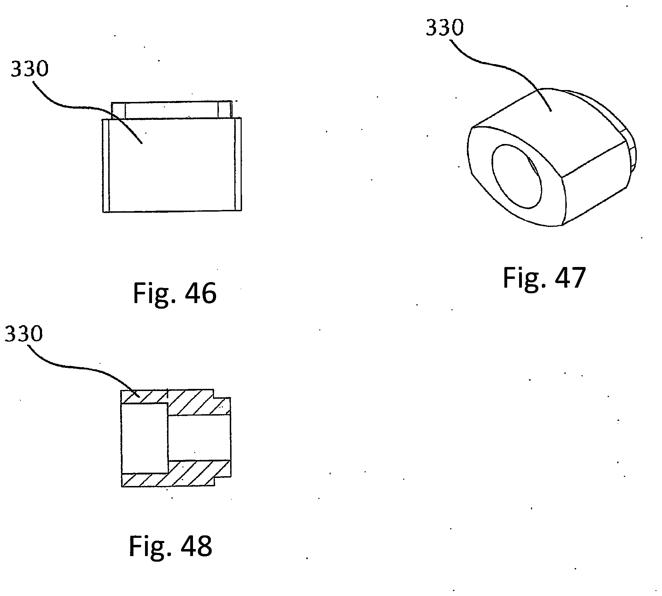

The stunning rod embodiment shown 40' has an elongated body 44' extending r along a longitudinal axis 42' (Fig. 39), with the elongated body 44' having a forward end 310 and an opposite rearward end 312. Body 44' may be solid for all or a portion of its length (Fig. 39) or may be hollow for all or a portion of its length (Fig. 44). The forward end 310 has a lip 311 extending out from the elongated body 44' parallel to the longitudinal axis 42'. The forward end 310 is sized with the same diameter(s) as the stunning rod body for striking (e.g. penetrating) an animal's head. Alternatively, the rod forward end 310 may be sized or may have an attachment (not shown) that has a sufficiently larger diameter to prevent penetration of the animal to be stunned. A hardened tip 330 may also be attached to the forward end 310 of the stunning rod 40', as shown in Figs. 46-48. The opposite rearward end 312 has formed in (or received as a separate piece as shown in Figs. 37, 38, and 40) an outwardly extending lip 46' for engagement with a catch 20, as described elsewhere herein.

As shown in Figs. 44 and 45, the stunning rod 40' also has a mounting portion 316 adjacent to the elongated body 44' and located between the forward end 310 and rearward end 312. The mounting portion 316 may have a circular profile for receiving a piston 48'. The mounting portion 316 has a radially outwardly extending flange 317 which is perpendicular to the elongated body 44', as shown in Fig. 44. Referring to Fig. 41, the piston 48' has a cylindrical body with the front and rear surfaces both being flat. The piston 48' has a circular inner bore 52' which is secured to the stunning rod 40'. In particular, the size of the inner bore 52' conforms to the radial measurements of the mounting portion 316, which is also circular in shape. The piston 48' is axially received and rests on mounting portion 316 and is secured against flange 317.

Alternatively, piston 48' may be integrally formed with rod 40' of one piece, as shown in Fig. 39. The elongated body 44' has a circular profile adjacent to the piston 48' portion of the stunning rod 40'. On the forward end 310 facing side of the piston 48', the elongated body 44' flanges out in a semicircular manner where the forward-facing surface of the piston 48' and elongated body 44' integrally meet. The rearward end 312 adjacent piston 48' may receive or have integrally formed therein of one piece a lip 46' (Fig. 40) for engaging the catch.

Referring to Figs. 32 and 33, all or a portion of the length of body 44' of stunning rod 40' between the piston 48' and forward end 310 is configured to have a first pair of opposite sides 260 each having a first radius R1 and a first diameter D1, and width W1 between them in the Y-direction, and a second pair of opposite sides 270 each having a second radius R2 and a second diameter D2, and width W2 between them in the X-direction. The first radius R1 of the first pair of opposite sides 260 may be different from and larger than the second radius R2 of the second pair of opposite sides 270. The first width W1 between the first pair of sides 260 may be different from and smaller than the second width W2 of the second pair of sides 270. The rod 40' slides in the stunner in a commonly shaped opening in the nose and nose guide of the stunner, discussed further below. The first radius R1 may be any suitable dimension, such as from about 0.500 - .700 inches (1.27 - 1.778 cm), e.g., 0.600 in. (1.52 cm) and the second radius R2 may be any suitable dimension, such as from about 0.25 - 0.45 inches (0.635 - 1.143 cm), e.g. 0.375 in. (0.95 cm). The first width W1 may thus be any suitable dimension, such as from about 0.425 - 0.625 inches (1.0795 - 1.5875 cm), and the second width W2 may be any suitable dimension, such as from about .65 - .85 inches (1.651 - 2.159 cm), e.g., 0.750 in. (1.91 cm). Other sizes and dimensions may be employed.

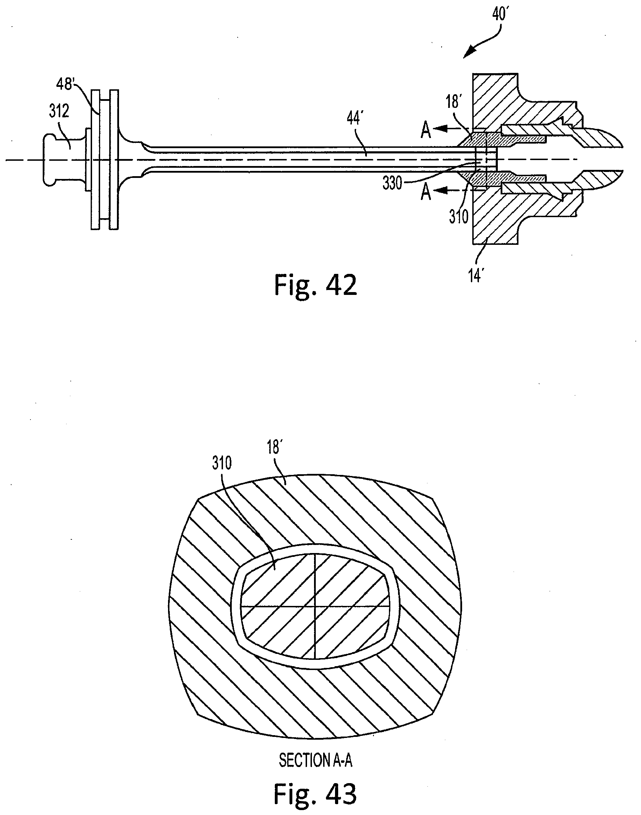

Referring to Figs. 42-43, an outer housing nose 14' surrounds the stunning rod 40' and includes a nose guide 18' with an opening through which the stunning rod passes. The bore in the outer housing nose guide 18' is slightly larger than and conforms to the radii R1, R2 and widths W1, W2 (as shown in Figs. 32 and 33) of the stunning rod 40' so as to permit sliding movement in the longitudinal direction. Unlike the circular cross section of the body 44 of stunning rod 40 described previously, the non-circular configuration of the rod body 44' with different widths in the X- and Y-directions prevents rotational movement of the rod about the longitudinal axis 42' within the nose guide and housing upon firing of the stunner.

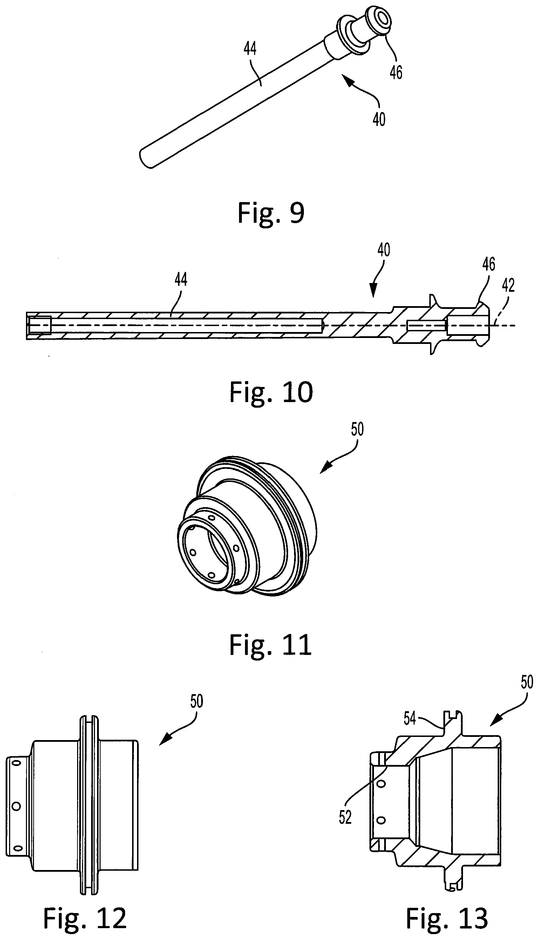

The structure and operation of catch 20 with respect to the stunning rod 40 is shown in more detail in Figs. 7-24. Figs 7-10 show the stunning rod 40 comprising an elongated body 44 having a longitudinal axis 42. A stunning rod lip 46 is disposed on one end of the stunning rod 40. Figs. 11-13 show a catch piston 50 having a smooth inner bore 52 and a catch piston flange 54. The stunning rod 40 is axially disposed on piston 48 within the housing 12 and is capable of being driven forward along the longitudinal axis 42 towards the front end of the housing 12 when pressurized air or other pneumatic fluid enters the chamber, as described above. The stunning rod 40 shown with the forward end sized for striking (e.g. penetrating) the animal's head, but other stunning rod designs and styles may be employed, including those with sufficiently large diameter of the forward end to prevent penetration of the animal being stunned. The alternate embodiment of stunning rod 44' may be employed in place of the embodiment 40 shown in Figs. 7-24.

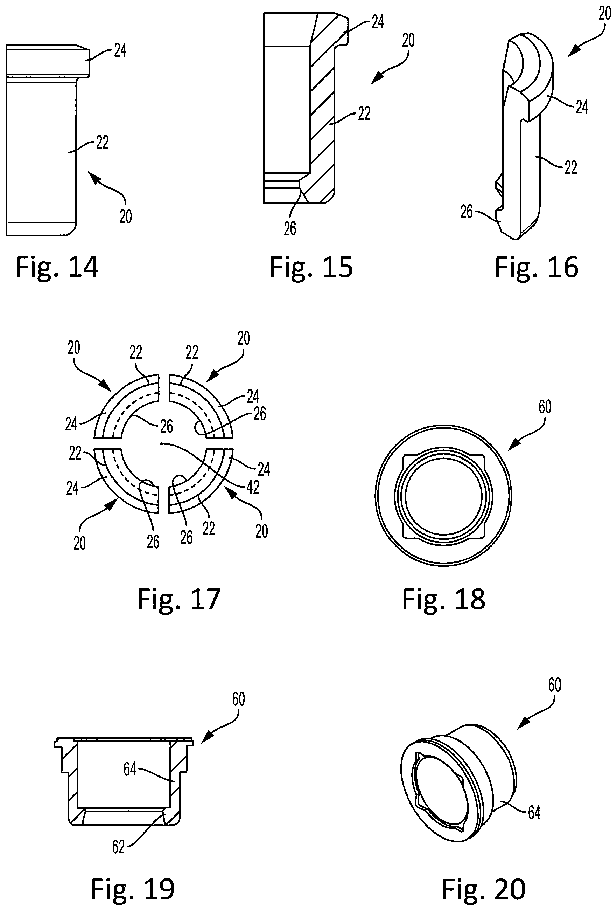

Figs. 14-17 show catch 20 having a catch body 22, at the forward end a catch end portion 26 with inward extending lips and near the rearward end an outward extending catch flange 24. Catch 20 is mounted within the housing 12 outside of the stunning rod longitudinal axis 42 for alternately holding and releasing the stunning rod 40. The catches 20 shown in Figs. 3-8 are two of four arcuate catches that may be arrayed around axis 42 as shown in their hold position Fig. 17 and employed in the example depicted in the drawings. Fewer or more than four catches may be employed. Catch body 22 rotates with respect to a catch pivot or post, shown herein in the form of a catch pivot ring 60 extending around the outer sides of the catch bodies (Figs. 7 and 8). The catch flange 24 extends outwardly away from axis 42 and is engageable with a catch pivot ring inner lip 62 extending inwardly from the end of the cylindrical body 64 of catch pivot ring 60 shown in Figs. 18-20.

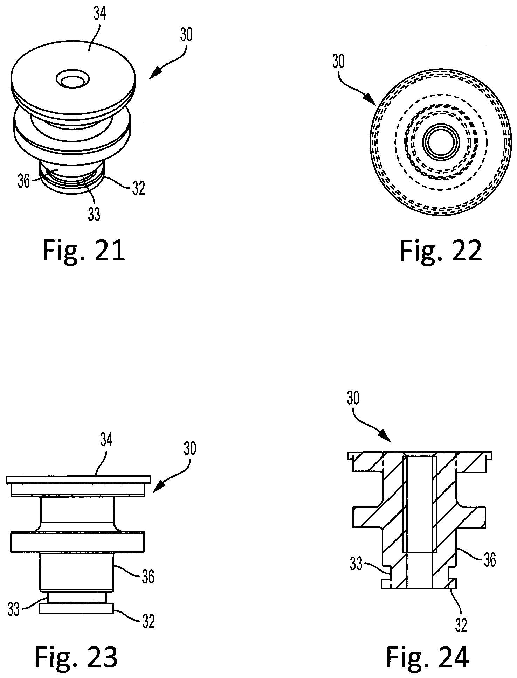

As shown in Figs. 7 and 8, catch body portion 22 is pivotally mounted on inner lip 62, between stationary catch pivot ring 60, disposed on a side away from axis 42, and stationary catch support 30 (see also Figs. 21-24), disposed on a side toward axis 42. The catch support 30 has a cylindrical body portion 36 and includes a circular support head 34 disposed adjacent the back portion of the housing 12 and a circular catch support distal end 32 which is disposed within the four arcuate catches 20. An external groove 33 is disposed in and around the outside of body 36 adjacent end 32 to receive an optional O-ring (discussed further below). The catch body portion 22 is disposed on an outward side of catch support 30 away from the stunning rod longitudinal axis 42. The catch 20 includes the end portion 26 extending from the body portion 22 toward the housing front end 14 and distal from the catch support 30. Since the example employs a plurality (four) catches arrayed about longitudinal axis 42, each catch 20 is constructed and held between catch pivot ring 60 and catch support 30 so that their ends 26 are normally extended away from each other and axis 42. The catch end portion 26 is movable by catch piston 50 to a hold position toward the longitudinal axis 42, where it engages stunning rod lip 46 preventing the stunning rod 40 from being driven forward. In the hold position catch body 22 is in contact with both the stationary catch pivot ring 60 and the stationary catch support distal end 32.

When catch piston 50 is longitudinally moved forward (Fig. 8), as will be described further below, the constraint placed on catch end portion 26 is removed, and the end portion 26 moves outward to a release position away from stunning rod lip 46 and the stunning rod longitudinal axis 42 permitting the stunning rod 40 to be driven forward. Outward movement of catch end portion 26 is caused by sliding movement of the angle or taper between the forward portion of stunning rod lip 46 and the rearward portion of the inward facing lip of catch end portion 26, as stunning rod 40 moves longitudinally forward. Catch end portion 26 may optionally be assisted in being urged to spring outward by an optional catch tension O-ring or elastic member 28 wrapped around the body 36 of the catch support 30, in groove 33. When in the hold position (Fig. 7, O-ring or elastic member 28 is compressed by catch body 22, so that when catch piston 50 moves forward, member 28 expands, thereby urging the catch body 22 and end 26 away from axis 42, which assist then reduces wear on the outer forward tapered surface of stunning rod lip 46. In this catch end portion release position away from axis 42, catch body 22 is in contact with the stationary catch pivot ring 60 and out of contact with the stationary catch support distal end 32.

The catch flange 24 is engaged with the catch pivot ring inner lip 62, allowing the catch flange 24 to be held pivotally between the catch pivot ring inner lip 62 and the catch support cylindrical body portion 36 (Figs. 21, 23, 24), allowing the catch 20 to pivot about the catch flange as shown in Fig. 8.

The catch 20 may be an arcuate section of a cylinder having an inner catch end portion 26 and an outer flange 24. The catch 20 shown in Fig. 16 has an arc of less than 90° as shown in Fig. 17 so that four catches 20 may be arranged cylindrically about the longitudinal axis 42 and within the catch pivot ring 60 with sufficient space between the catches 20 for the catches 20 to pivot on the catch pivot ring inner lip 62 without interfering with one another. The four catches 20 are supported from collapsing on one another by the catch support 30.

The catch piston 50 is disposed adjacent the catch end portion 26 on a catch side away from the longitudinal axis. The catch piston 50 is in sliding contact with the catch 20 adjacent the catch end portion 26 and out of contact with the catch body portion 22. The catch piston 50 is adapted to slide in the directions of the longitudinal axis 42 between a first, rearward position, shown in Fig. 3, urging the catch end portion 26 toward the stunning rod lip 46 longitudinal axis 42 in the hold position, thereby holding and preventing the stunning rod 40 from being driven forward, and a second, forward position, shown in Fig. 4, permitting the catch end portion 26 to move to the release position away from the stunning rod lip 46 longitudinal axis 42, releasing and permitting the stunning rod 40 to be driven forward.

As described above in connection with Fig. 6, at the end of the firing sequence piston 48 reverses direction in chamber 180, and moves rearward to strike the forward end 51 of catch piston 50, to move it rearward and force catches 20 inward, as shown in Fig. 7. In the closed or locked position, the catch end portion 26 is fully engaged with the stunning rod lip 46, holding the stunning rod 40 from moving forward. The catch 20 is held in the fully engaged position by the catch piston inner bore 52. In operation, as the firing sequence commences, the pneumatic pressure in chamber 188 moves the catch piston 50 forward (rightward) toward the housing front end 14. Once the inner bore 52 moves forward past the catch end portion 26, as shown in Fig. 8, the catch 20 pivots about the catch pivot ring inner lip 62 wherein each catch end portion 26 moves outward from the cylindrical orientation, disengaging the catch end portion 26 and the stunning rod lip 46. In the disengaged position, the catch body portion 22 is not in contact with the catch piston 50 or the stationary catch support distal end 32. The force of pressurized air drives piston 48 forward and stunning rod 40 moves along the stunning rod longitudinal axis 42 toward the housing front end 14 from the force of the pressurized air or other pneumatic fluid.

The present invention therefore provides a mount for an improved animal stunner having one or more of the following advantages. Improvements to handle design, orientation and mounting provides improved operator comfort and reduction of possible injury.

## Claims

1. A mount (220, 220') for connecting a housing (12) to a handle (136) of an animal stunner (10), the housing (12) having a stunning rod (40, 40') therein capable of being driven along a longitudinal axis (42, 42') forward to stun an animal and rearward to retract the stunning rod (40, 40'), the handle (136) having a valve trigger (146) to control flow of a pressurized fluid to drive the stunning rod (40, 40') forward, each of the housing (12) and handle (136) having a plurality of passageways (156, 158, 160) for the pressurized fluid to drive the stunning rod (40, 40'), the mount (220, 220') comprising:
a first mount portion (222) for connection to a main valve body (166) of the housing (12), said first mount portion (222) including a plurality of passageways (156a, 158a, 160a) which mate with passageways (156, 158 160), respectively, opening from said main valve body (166);
a second mount portion (226) for connection to the handle (136), said second mount portion (226) including a plurality of passageways (156b, 158b, 160b) which mate with passageways (156, 158 160), respectively, opening from main handle (136);
a plurality of hoses (234a,b,c) connecting said first mount portion (222) plurality of passageways (156a, 158a, 160a) to said second mount portion (226) plurality of passageways (156b, 158b, 160b);
wherein the first (222) and second (226) mount portions each have opposite edges, the edges of the first mount portion (222) being spaced from the edges of the second mount portion (226), the first (222) and second (226) mount portions being secured to each other between the opposite edges; and
wherein the first mount portion plurality of passageways (156a, 158a, 160a), the second mount portion plurality of passageways (156b, 158b, 160b), or both (156a,b, 158a,b, 160a,b) contain different patterns of passageways for connecting the housing and handle passageways (156, 158, 160) proximate to the location at which the first (222) and second (226) mount portions are secured to each other such that said handle (136) may be mounted to said housing (12) in a plurality of orientations.

2. The mount (220, 220') of claim 1 wherein the first mount portion (222) and second mount portion (226) are secured to each other along an axis to permit a pivoting motion between the first (222) and second (226) mount portions.

3. The mount (220, 220') of claim 1 wherein the spacing between the first edges of the first mount portion (222) and second mount portion (226) is not equal to the spacing between the second edges of the first mount portion (222) and second mount portion (226).

4. The mount (220, 220') of claim 2 further including a pin (236) along the axis wherein the pin (236) includes at least one passageway (156c, 158c, 160c) for connecting the housing (12) and handle passageways (156, 158, 160).

5. The mount (220, 220') of claim 2 further including at least one pin (236) along the axis where the first (222) and second (226) mount portions are secured.

6. The mount (220, 220', 220") of claim 1 wherein at least one cushion (230a, 230a', 230b, 230b') is disposed between the mount first (222) and second (226) portions.

7. The mount (220, 220', 220") of claim 6 wherein the at least one cushion (230a', 230b') has a first portion with an edge (231) sealing the space between one of the opposite edge portions of the first (222) and second (226) mount portion, and the cushion (230a', 230b') has a second portion with an edge (231) sealing the space between the other of the opposite edge portions of the first (222) and second (226) mount portions.

8. The mount (220, 220') of claim 7 wherein the first and second cushion portions (230a', 230b') are separate pieces.

9. The mount (220, 220', 220") of claim 7 wherein the cushion is a single piece (230"), and further includes a third portion connecting the first and second cushion portions.

10. The mount (220, 220', 220") of claim 7 wherein the cushion is a single piece (230"), and further includes a third portion connecting the first and second cushion portions, the third portion further including at least one passageway (156c', 158c', 160c') for connecting the housing and handle passageways (156, 158, 160).

## Patentansprüche

1. Halterung (220, 220') zum Verbinden eines Gehäuses (12) mit einem Griff (136) eines Tierbetäubungsgeräts (10), wobei das Gehäuse (12) eine Betäubungsstange (40, 40') aufweist, die entlang einer Längsachse (42, 42') nach vorne betätigbar ist, um ein Tier zu betäuben, und nach hinten, um die Betäubungsstange (40, 40') zurückzuziehen, wobei der Griff (136) einen Ventilauslöser (146) aufweist, um den Fluss eines unter Druck stehenden Fluids zu steuern, um die Betäubungsstange (40, 40') vorwärts zu betätigen, wobei sowohl das Gehäuse (12) als auch der Griff (136) mehrere Kanäle (156, 158, 160) für das unter Druck stehende Fluid aufweisen, um die Betäubungsstange (40, 40') anzusteuern, wobei die Halterung (220, 220') aufweist:
einen ersten Befestigungsabschnitt (222) zum Verbinden mit einem Hauptventilkörper (166) des Gehäuses (12), wobei der erste Befestigungsabschnitt (222) mehrere Kanäle (156a, 158a, 160a) aufweist, die jeweils mit Kanälen (156, 158, 160) verbunden sind, die sich von dem Hauptventilkörper (166) öffnen;
einen zweiten Befestigungsabschnitt (226) zum Verbinden mit dem Griff (136), wobei der zweite Befestigungsabschnitt (226) mehrere Kanäle (156b, 158b, 160b) aufweist, die jeweils mit Kanälen (156, 158, 160) verbunden sind, die sich vom Hauptgriff (136) aus öffnen;
mehrere Schläuche (234a,b,c), die den ersten Befestigungsabschnitt (222) mit mehreren Kanälen (156a, 158a, 160a) mit dem zweiten Befestigungsabschnitt (226) mit mehreren Kanälen (156b, 158b, 160b) verbinden;
wobei der erste (222) und der zweite (226) Befestigungsabschnitt jeweils gegenüberliegende Kanten aufweisen, wobei die Kanten des ersten Befestigungsabschnitts (222) von den Kanten des zweiten Befestigungsabschnitts (226) beabstandet sind, wobei der erste (222) und der zweite (226) Befestigungsabschnitt zwischen den gegenüberliegenden Kanten aneinander befestigt sind; und
wobei der erste Befestigungsabschnitt mehrere Kanäle (156a, 158a, 160a), der zweite Befestigungsabschnitt mehrere Kanäle (156b, 158b, 160b) oder beide (156a,b, 158a,b, 160a,b) unterschiedliche Anordnungen von Kanälen zum Verbinden der Gehäuse- und Griffkanäle (156, 158, 160) in der Nähe der Stelle enthalten, an der der erste (222) und der zweite (226) Befestigungsabschnitt aneinander befestigt sind, so dass der Griff (136) in mehreren Ausrichtungen an dem Gehäuse (12) montiert werden kann.

2. Die Halterung (220, 220') nach Anspruch 1, wobei der erste Befestigungsabschnitt (222) und der zweite Befestigungsabschnitt (226) entlang einer Achse aneinander befestigt sind, um eine Schwenkbewegung zwischen dem ersten (222) und dem zweiten (226) Befestigungsabschnitt zu ermöglichen.

3. Halterung (220, 220') nach Anspruch 1, wobei der Abstand zwischen den ersten Kanten des ersten Befestigungsabschnitts (222) und des zweiten Befestigungsabschnitts (226) nicht gleich dem Abstand zwischen den zweiten Kanten des ersten Befestigungsabschnitts (222) und des zweiten Befestigungsabschnitts (226) ist.

4. Halterung (220, 220') nach Anspruch 2, die ferner einen Stift (236) entlang der Achse aufweist, wobei der Stift (236) mindestens einen Kanal (156c, 158c, 160c) zum Verbinden der Gehäuse- (12) und der Griffkanäle (156, 158, 160) aufweist.

5. Halterung (220, 220') nach Anspruch 2, die ferner mindestens einen Stift (236) entlang der Achse aufweist, an der der erste (222) und der zweite (226) Befestigungsabschnitt befestigt sind.

6. Halterung (220, 220', 220") nach Anspruch 1, wobei mindestens ein Polster (230a, 230a', 230b, 230b') derart ausgebildet ist, dass es zwischen dem ersten (222) und dem zweiten (226) Abschnitt der Halterung angeordnet ist.

7. Halterung (220, 220', 220") nach Anspruch 6, wobei das mindestens eine Polster (230a', 230b') einen ersten Abschnitt mit einem Rand (231) aufweist, der den Raum zwischen einem der gegenüberliegenden Randabschnitte des ersten (222) und zweiten (226) Befestigungsabschnitts abdichtet, und das Polster (230a', 230b') einen zweiten Abschnitt mit einem Rand (231) aufweist, der den Raum zwischen dem anderen der gegenüberliegenden Randabschnitte des ersten (222) und zweiten (226) Befestigungsabschnitts abdichtet.

8. Halterung (220, 220') nach Anspruch 7, wobei der erste und der zweite Abschnitt (230a', 230b') des Polsters separate Teile sind.

9. Halterung (220, 220', 220") nach Anspruch 7, wobei das Polster ein einstückig ausgebildetes Teil (230") ist und ferner einen dritten Abschnitt aufweist, der den ersten und den zweiten Befestigungsabschnitt verbindet.

10. Halterung (220, 220', 220") nach Anspruch 7, wobei das Polster einstückig (230") ist und ferner einen dritten Abschnitt aufweist, der den ersten und den zweiten Polsterabschnitt verbindet, wobei der dritte Abschnitt ferner mindestens einen Kanal (156c', 158c', 160c') zum Verbinden der Gehäuse- und Griffkanäle (156, 158, 160) aufweist.

## Revendications

1. Support (220, 220') pour relier un boîtier (12) à une poignée (136) d'un étourdisseur d'animaux (10), le boîtier (12) comportant une tige d'étourdissement (40, 40') pouvant être entraînée le long d'un axe longitudinal (42, 42') vers l'avant pour étourdir un animal et vers l'arrière pour rétracter la tige d'étourdissement (40, 40'), la poignée (136) comportant une gâchette de vanne (146) pour contrôler l'écoulement d'un fluide sous pression destiné à entraîner la tige d'étourdissement (40, 40') vers l'avant, le boîtier (12) et la poignée (136) comportant chacun une pluralité de passages (156, 158, 160) pour le fluide sous pression destiné à entraîner la tige d'étourdissement (40, 40'), le support (220, 2201) comprenant :
une première partie de support (222) pour la liaison à un corps de vanne principal (166) du boîtier (12), ladite première partie de support (222) incluant une pluralité de passages (156a, 158a, 160a) qui correspondent respectivement à des passages (156, 158 160) s'ouvrant à partir dudit corps de vanne principal (166) ;
une deuxième partie de support (226) pour la liaison à la poignée (136), ladite deuxième partie de support (226) incluant une pluralité de passages (156b, 158b, 160b) qui correspondent respectivement à des passages (156, 158 160) s'ouvrant à partir de la poignée principale (136) ;
une pluralité de tuyaux (234a,b,c) reliant ladite pluralité de passages (156a, 158a, 160a) de la première partie de support (222) à ladite pluralité de passages (156b, 158b, 160b) de la deuxième partie de support (226) ;
dans lequel la première (222) et la deuxième (226) partie de support présentent chacune des bords opposés, les bords de la première partie de support (222) étant espacés des bords de la deuxième partie de support (226), la première (222) et la deuxième (226) partie de support étant fixées l'une à l'autre entre les bords opposés ; et
dans lequel la pluralité de passages (156a, 158a, 160a) de la première partie de support, la pluralité de passages (156b, 158b, 160b) de la deuxième partie de support, ou les deux (156a,b, 158a,b, 160a,b) contiennent différents motifs de passages pour relier les passages de boîtier et de poignée (156, 158, 160) à proximité de l'emplacement où la première (222) et la deuxième (226) partie de support sont fixées l'une à l'autre, de sorte que ladite poignée (136) peut être montée sur ledit boîtier (12) dans une pluralité d'orientations.

2. Support (220, 220') selon la revendication 1, dans lequel la première partie de support (222) et la deuxième partie de support (226) sont fixées l'une à l'autre le long d'un axe pour permettre un mouvement de pivotement entre la première (222) et la deuxième (226) partie de support.

3. Support (220, 220') selon la revendication 1, dans lequel l'espacement entre les premiers bords de la première partie de support (222) et de la deuxième partie de support (226) n'est pas égal à l'espacement entre les deuxièmes bords de la première partie de support (222) et de la deuxième partie de support (226).

4. Support (220, 220') selon la revendication 2, incluant en outre une goupille (236) le long de l'axe, dans lequel la goupille (236) inclut au moins un passage (156c, 158c, 160c) pour relier le boîtier (12) et les passages de poignée (156, 158, 160).

5. Support (220, 220') selon la revendication 2, incluant en outre au moins une goupille (236) le long de l'axe où la première (222) et la deuxième (226) partie de support sont fixées.

6. Support (220, 220', 220") selon la revendication 1, dans lequel au moins un coussin (230a, 230a', 230b, 230b') est disposé entre la première (222) et la deuxième (226) partie de support.

7. Support (220, 220', 220") selon la revendication 6, dans lequel ledit au moins un coussin (230a', 230b') présente une première partie avec un bord (231) scellant l'espace entre l'une des parties de bord opposées de la première (222) et de la deuxième (226) partie de support, et le coussin (230a', 230b') présente une deuxième partie avec un bord (231) scellant l'espace entre l'autre des parties de bord opposées de la première (222) et de la deuxième (226) partie de support.

8. Support (220, 220') selon la revendication 7, dans lequel les première et deuxième parties de coussin (230a', 230b') sont des pièces séparées.

9. Support (220, 220', 220") selon la revendication 7, dans lequel le coussin est une pièce unique (230") et inclut en outre une troisième partie reliant les première et deuxième parties de coussin.

10. Support (220, 220', 220") selon la revendication 7, dans lequel le coussin est une pièce unique (230") et inclut en outre une troisième partie reliant les première et deuxième parties de coussin, la troisième partie incluant en outre au moins un passage (156c', 158c', 160c') pour relier les passages de boîtier et de poignée (156, 158, 160).
